# EUROPÄISCHE PATENTSCHRIFT

(11) **EP 2 352 887 B1**
(45) Veröffentlichungstag und Bekanntmachung des Hinweises auf die Patenterteilung: **18.12.2013**
(21) Anmeldenummer: 08875333.0
(22) Anmeldetag: 18.11.2008
(51) Int. Cl.: E04C 3/00, E04C 3/28, B28B 23/00, B29C 70/44, B29D 24/00

(54) **KONSTRUKTIONSELEMENTE FÜR BAUTEN**
CONSTRUCTION ELEMENTS FOR BUILDINGS
ELEMENTS DE CONSTRUCTION POUR BATIMENTS

(43) Veröffentlichungstag der Anmeldung: 10.08.2011
(73) Patentinhaber: Zürcher Hochschule für Angewandte Wissenschaften ZHAW, 8401 Winterthur (CH)
(72) Erfinder: KURATH-GROLLMANN, Josef, Peter, CH-8409 Winterthur (CH)
(74) Vertreter: Werner, André
(86) Internationale Anmeldenummer: PCT/EP2008/065770
(87) Internationale Veröffentlichungsnummer: WO 2010/057522

(56) Entgegenhaltungen:
- EP-A- 0 892 123
- WO-A-2005/038160
- FR-A- 2 192 231
- US-A- 4 741 089
- US-A1- 2003 096 096

## Beschreibung

### Technisches Gebiet

Die Erfindung bezieht sich auf Gegenstände und Verfahren gemäss dem Oberbegriff der unabhängigen Patentansprüche. Insbesondere bezieht sich die Erfindung auf statisch tragende Konstruktionselemente.

### Stand der Technik

Für statisch tragende Bauteile im Gebäudebau werden heute vorwiegend kompakte schwere Bauteile aus Stahl, Stahlbeton, Holz oder Aluminium eingesetzt. Diese massiven Bauteile haben meistens ein geringes Nutzlast-zu-Eigengewicht-Verhältnis. Das Nutzlast-zu-Eigengewicht-Verhältnis beträgt typischerweise ungefähr 3:1 bis 1:2.

Es ist wünschenswert, Konstruktionselemente mit einem besonders grossen Nutzlast-zu-Eigengewicht-Verhältnis zu haben. Dies würde beispielsweise erlauben, bei relativ geringem Eigengewicht der Konstruktionselemente relativ grosse Spannweiten zu überbrücken. Auch würde eine untenliegende Konstruktion weniger belastet.

Beispielsweise ist aus FR 2 192 231 eine Tragstruktur, die ein Halbzeug gemäß des Oberbegriffs des Anspruchs 1 offenbart, bekannt, bei welcher ein Glasfaser-Kunstharz-Material ein leichtes, hohles Kernelement umhüllt. Im Inneren dieses Kernelements sind Verstrebungen eingeschlossen, welche zwei einander gegenüberliegende Wandteile des Kernelements verbinden.

### Darstellung der Erfindung

Es ist eine Aufgabe der Erfindung, Konstruktionselemente der eingangs genannten Art zu schaffen, welche ein besonders grosses Nutzlast-zu-Eigengewicht-Verhältnis aufweisen. Weiter sollen Verfahren zur Herstellung solcher Konstruktionselemente geschaffen werden sowie Halbzeuge, die bei der Fertigung solcher Konstruktionselemente verwendet werden können.

Eine weitere Aufgabe der Erfindung ist, Konstruktionselemente zu schaffen, die es erlauben, bei relativ geringem Eigengewicht relativ grosse Spannweiten zu überbrücken.

Eine weitere Aufgabe der Erfindung ist, besonders stabile und dennoch leichte Konstruktionselemente zu schaffen.

Eine weitere Aufgabe der Erfindung ist, Konstruktionselemente zu schaffen, die vielfältig anwendbar sind.

Eine weitere Aufgabe der Erfindung ist, Verfahren zur Herstellung von Konstruktionselementen zu schaffen, die besonders wenige Verfahrensschritte umfassen.

Eine weitere Aufgabe der Erfindung ist, Halbzeuge zu schaffen, die eine einfache Fertigbarkeit der Konstruktionselemente ermöglichen.

Die Konstruktionselemente können eher längliche Konstruktionselemente sein oder eher flächige Konstruktionselemente, auch als Flächenelemente bezeichnet.

Mindestens eine dieser Aufgaben lösen Vorrichtungen und Verfahren mit den Merkmalen der unabhängigen Patentansprüche.

Die Erfindung betrifft ein Halbzeug gemäß Anspruch 1 für statisch tragende Konstruktionselemente, das ein schlauchartig entlang einer Längsachse erstrecktes Hüll-Element sowie mindestens ein erstes und mindestens ein zweites innerhalb des Hüll-Elementes angeordnetes Verstrebungselement aufweist. Das erste Verstrebungselement ist von einem ersten Punkt zu einem zweiten Punkt erstreckt und das zweite Verstrebungselement von einem dritten Punkt zu einem vierten Punkt, wobei die Projektionen der genannten Punkte in eine zu der Längsachse senkrechte Ebene vier Eckpunkte eines Rechteckes bilden und die Projektionen des ersten und des zweiten Punktes einander bezüglich der Längsachse gegenüberliegende Eckpunkte des Rechteckes bilden. Dabei sind die Verstrebungselemente in Richtung der Längsachse voneinander beabstandet oder in Richtung der Längsachse hintereinander und sich gegebenenfalls überlappend angeordnet und jedes Verstrebungselement im ersten bzw. dritten und zweiten Punkt bzw. vierten Punkt ist nur an das schlauchartige Hüll-Element anliegend angeordnet, ohne an dem Hüll-Element befestigt zu sein und nicht an diesem zu haften, so dass durch das Hüll-Element keine Zugkräfte auf die Verstrebungselemente ausübbar sind.

Das Halbzeug weist ein schlauchartig entlang einer Längsachse erstrecktes Hüll-Element auf sowie mindestens ein erstes und mindestens ein zweites innerhalb des Hüll-Elementes angeordnetes Verstrebungselement. Das erste Verstrebungselement ist von einem ersten Punkt zu einem zweiten Punkt erstreckt, und das zweite Verstrebungselement ist von einem dritten Punkt zu einem vierten Punkt erstreckt, wobei die Projektionen der genannten Punkte in eine zu der Längsachse senkrechte Ebene vier Eckpunkte eines Rechteckes bilden, wobei die Projektionen des ersten und des zweiten Punktes einander bezüglich der Längsachse gegenüberliegende Eckpunkte des Rechteckes bilden.

Es bilden somit auch die Projektionen des dritten und des vierten Punktes einander bezüglich der Längsachse gegenüberliegende Eckpunkte des Rechteckes.

Ein solches Halbzeug ermöglicht es, ein erfindungsgemässes Konstruktionselement und insbesondere ein erfindungsgemässes Flächenelement in wenigen Schritten zu erstellen. Weiter ist ein solches Halbzeug einfach vorfabrizerbar.

Die Halbzeuge können auch in bereits bestehende hohlkörperbasierte Konstruktionen eingebaut, beispielsweise eingeführt, eingeschoben, werden.

Das Halbzeug ist ein Halbzeug für die Bildung eines Konstruktionselementes.

In einer Ausführungsform ist das Hüll-Element folienartig. Solche Hüll-Elemente sind sehr dünn und können einfach erstellt und auf die Verstrebungselemente aufgebracht werden.

Das Hüll-Element ammantelt die Verstrebungselement-Anordnung.

In einer Ausführungsform sind die Verstrebungselemente durch das Hüll-Element gehalten. Das Hüll-Element kann auch als Halteelement bezeichnet werden. Durch das Hüll-Element können die Verstrebungselemente relativ zueinander gehalten sein.

In einer Ausführungsform weist das Halbzeug mindestens je zwei erste und zweite Verstrebungselemente auf.

In einer Ausführungsform weist das Halbzeug eine Vielzahl erster und zweiter Verstrebungselemente auf. In einer Ausführungsform ist die relative Position der Verstrebungselemente zueinander durch das Hüll-Element zumindest grob bestimmt; insbesondere kann die relative Position von einem ersten zu einem zweiten Verstrebungselement, die gemeinsam ein Paar von Verstrebungselementen bilden, durch das Hüll-Element im wesentlichen bestimmt sein. Dadurch wird die Erstellung von Konstruktionselementen und insbesondere Flächenelementen stark vereinfacht.

In einer Ausführungsform bildet das Hüll-Element einen geschlossenen Schlauch, ggf. bis auf eines oder beide seiner Schlauch-Enden.

In einer Ausführungsform sind die Verstrebungselemente komplett innerhalb des Hüll-Elementes angeordnet, allenfalls mit Ausnahme der Endbreiche des Hüll-Elementes.

Dadurch kann verhindert werden, dass die Verstrebungselemente in weiteren Vefahrensschritten zur Erstellung von Konstruktions-, insbesondere Flächenelementen mit weiteren Bestandteilen des Konstruktions-, beziehungsweise Flächenelementes in Kontakt kommt, wodurch ein Anhängen von Verstrebungselementen an diesen weiteren Bestandteilen, wie ein Verkleben damit, verhindert wird.

Es wird die bei einem Blick entlang der Längsachse sichtbare äussere Kontur des Hüll-Elementes im wesentlichen durch das bereits erwähnte Rechteck mit den genannten Punkten als Eckpunkten gebildet. Die Diagonalen des Rechteckes verlaufen durch die Projektionen des ersten und zweiten beziehungsweise durch Projektionen des dritten und vierten Punktes.

Es erstrecken sich sowohl das erste als auch das zweite Verstrebungselement sowohl entlang der einen wie auch entlang der anderen Diagonalen.

In einer Ausführungsform sind die Verstrebungselemente so ausgebildet und innerhalb des Hüll-Elementes so angeordnet, dass durch das Hüll-Element Druckkräfte auf die Verstrebungselemente ausübbar sind.

Es sind die Verstrebungselemente so ausgebildet und innerhalb des Hüll-Elementes so angeordnet, dass durch das Hüll-Element keine Zugkräfte auf die Verstrebungselemente ausübbar sind.

Diese Eigenschaften bezüglich der Druck- beziehungsweise Zugkräfte kommen vor allem dann zum Tragen, wenn das Halbzeug Teil eines damit erstellten Konstruktionselementes ist.

In einer Ausführungsform liegen der erste und der zweite Punkt in ein und derselben Ebene senkrecht zu der Längsachse, und der dritte und der vierte Punkt liegen in ein und derselben Ebene senkrecht zu der Längsachse.

In einer Ausführungsform sind die Verstrebungselemente jeweils im wesentlichen senkrecht zu der Längsachse ausgerichtet.

In einer Ausführungsform ist das Hüll-Element im wesentlichen eine Folie.

In einer Ausführungsform wird das Hüll-Element zumindest im wesentlichen durch eine gewickelte Folie gebildet.

In einer Ausführungsform ist die Folie auf Verstrebungselemente aufgeschrumpft. Dadurch wird eine einfache Herstellbarkeit erreicht.

In einer Ausführungsform ist die Folie zur Bildung des Schlauches mit sich selbst verklebt oder verschweisst. Dadurch wird eine einfache Herstellbarkeit erreicht.

In einer Ausführungsform ist die Folie mit den Verstrebungselementen verklebt oder verschweisst. Dadurch wird erreicht, dass die Verstrebungselemente durch das Hüll-Element gut in ihrer Position gehalten werden.

In einer Ausführungsform ist die Verklebung oder Verschweissung der Folie mit den Verstrebungselementen nur temporär. Das heisst, dass die Verklebung oder Verschweissung spätestens bei Gebrauch eines mit dem Halbzeug gebildeten Konstruktionselementes nicht mehr hält.

In einer Ausführungsform weist das Hüll-Element in mindestens einer durch das Hüll-Element gebildeten Fläche, die zwei der genannten Punkte enthält, eine im wesentlichen parallel zur Längsachse verlaufende Sicke auf. Durch eine solche Sicke kann sichergestellt werden, dass sich in einem Herstellungsverfahren für ein Flächenelement das Hüll-Element an den genannten Punkten nicht zu weit von den Verstrebungselementen entfernt. Dadurch wird bewirkt, dass die Position der Verstrebungselemente innerhalb des Flächenelementes im wesentlichen fixiert ist und bleibt. Desweiteren können die Verstrebungselemente bereits beim Auftreten kleiner Druckkräfte (die auf ein Konstruktionselement wirken, das das Halbzeug enthält) Druck aufnehmen und so zur Stabilität beitragen.

In einer Ausführungsform verläuft die Sicke im wesentlichen durch die Mitte zwischen den zwei genannten Punkten.

In einer Ausführungsform weist das Hüll-Element in zwei einander gegenüberliegenden durch das Hüll-Element gebildeten Flächen solche Sicken auf.

In einer Ausführungsform weist das Hüll-Element in allen vier durch das Hüll-Element gebildeten Flächen solche Sicken auf.

In einer Ausführungsform weist die Sicke einen im wesentlichen V-förmigen Querschnitt auf.

In einer Ausführungsform ist das Hüll-Element über den Verstrebungselementen vorgespannt.

In einer Ausführungsform sind das erste Verstrebungselement und das zweite Verstrebungselement ineinander eingreifend ausgebildet.

In einer Ausführungsform sind das erste Verstrebungselement und das zweite Verstrebungselement derart ineinander eingreifend ausgebildet, dass jeweils das eine Verstrebungselement ein Biegen des jeweils anderen Verstrebungselementes erschwert oder verhindert, insbesondere ein Biegen des jeweils anderen Verstrebungselementes senkrecht zur Längsachse.

Dadurch kann die Gesamt-Stabilität stark erhöht und/oder das Gewicht der Verstrebungselemente reduziert werden.

In einer Ausführungsform weisen das erste

Verstrebungselement und das zweite Verstrebungselement jeweils eine Nut auf, wobei das erste und das zweite Verstrebungselement an den Nuten ineinandergreifen.

In einer Ausführungsform sind die Nuten im wesentlichen mittig zwischen erstem und zweitem bzw. zwischen drittem und viertem Punkt angeordnet. Auf diese Weise wird dort einer Biegung der Verstrebungselemente entgegengewirkt, wo diese im allgemeinen ihre maximale Amplitude hätte.

In einer Ausführungsform sind die Verstrebungselemente im wesentlichen
- aus Keramik,
- aus Beton oder
- aus einem Kunststoff, insbesondere einem Kunststoff-Verbundwerkstoff, beispielsweise einem faserverstärktem Kunststoff
gefertigt. Dabei können Fasern wie zum Beispiel Glasfasern oder Kohle-, Aramid- oder Basaltfasern oder auch Naturfasern verwendet werden. Als Kunststoffe kommen sowohl Duroplaste als auch Thermoplaste in Frage, insbesondere zum Beispiel Epoxid, Polyester, Polyurethan, PMMA, Vinylester und Polyamid.

In einer Ausführungsform weist das Halbzeug mehrere zueinander in Richtung der Längsachse voneinander beabstandete Verstrebungselemente auf, beispielsweise in regelmässigen Abständen.

In einer Ausführungsform weist das Halbzeug mehrere in Richtung der Längsachse hintereinander angeordnete und sich gegebenenfalls überlappende Verstrebungselemente auf.

In einer Ausführungsform werden als erste und zweite Verstrebungselemente Gleichteile verwendet. Dies vereinfacht Herstellung und Handhabung der Verstrebungselemente.

Das Konstruktionselement weist ein Halbzeug der oben beschriebenen Art auf, wobei das Hüll-Element einen entlang der Längsachse erstreckten Hohlkörper mit im wesentlichen rechteckigem Querschnitt mit gegebenenfalls gerundeten Ecken bildet oder innerhalb eines solchen Hohlkörpers des Konstruktionselementes angeordnet ist. Einerseits kann also das Hüll-Element selbst den Hohlkörper des Konstruktionselementes bilden, in welchem Falle es vorzugsweise zumindest vorwiegend aus einem faserverstärkten Kunststoff gefertigt ist. Andererseits kann das Konstruktionselement zusätzlich zum Hüll-Element den genannten Hohlkörper aufweisen, wobei dann das Hüll-Element innerhalb des Hohlkörpers angeordnet ist und vorzugsweise zumindest vorwiegend aus einem folienartigem Material gefertigt ist.

Durch das Vorsehen der Verstrebungselemente innerhalb des Hohlkörpers wird eine Stabilisierung des Hohlkörpers erreicht, so dass dieser relativ dünnwandig ausgebildet sein kann und insgesamt ein stabiles aber sehr leichtes Konstruktionselement resultiert. Der Hohlkörper und somit das Konstruktionselement wird durch die Verstrebungselemente versteift.

Auf diese Weise können Nutzlast-zu-Eigengewicht-Verhältnisse von ungefähr 5:1 bis 10:1 erreicht werden.

In einer Ausführungsform ist das Halbzeug den Innenkanten des Hohlkörpers angeformt. Dadurch können Druckkräfte besonders gut von dem Hohlkörper auf die Verstrebungselemente übertragen werden.

Es sind die Verstrebungselemente mit dem Höhlkörper nicht kraftschlüssig verbunden.

Die Verbindung zwischen Hohlkörper und Verstrebungselementen kann fast punktförmig, im wesentlichen linienförmig oder auch flächig sein.

Es sind die Verstrebungselemente nicht am Hohlkörper befestigt und haften nicht am Hohlkörper.

In einer Ausführungsform ist durch das Hüll-Element sichergestellt, dass die Verstrebungselemente nicht am Hohlkörper haften oder befestigt sind.

Es erstrecken sich die Verstrebungselemente jeweils entlang beider Diagonalen. Solche Verstrebungselemente können besonders stabil sein.

In einer Ausführungsform sind auf einer Länge, die höchstens 30mal der Diagonalenlänge entspricht und insbesondere mindestens einmal der Diagonalenlänge entspricht, mindestens ein erstes und mindestens ein zweites Verstrebungselement angeordnet. Dadurch kann eine hohe Stabilität erreicht werden, insbesondere bei geringem Gewicht.

In einer Ausführungsform erstrecken sich entlang der Längsachse benachbart angeordnete Verstrebungselemente jeweils alternierend entlang der einen und der anderen Diagonalen. Dadurch kann eine hohe Stabilität erreicht werden.

In einer Ausführungsform sind die parallel zur Längsachse erstreckten Flächen des Hohlkörpers komplett geschlossen.

In einer Ausführungsform ist der Hohlkörper im wesentlichen aus einem faserverstärkten, insbesondere aus einem glasfaserverstärkten Kunststoff gefertigt oder aus einem anderen Kunststoff-Verbundwerkstoff. Bezüglich des Kunststoffes und der Fasern kommen die gleichen Materialien in Frage, wie sie weiter oben für die Verstrebungselemente angegeben sind.

In einer Ausführungsform sind die Fasern im wesentlichen papierfaserartig angeordnet.

In einer Ausführungsform bildet der überwiegende Teil der Fasern, insbesondere mindestens 80% der Fasern, einen Winkel von 45°±25°, insbesondere 45°±15° mit der Längsachse.

In einer Ausführungsform ist der überwiegende Teil der Fasern, insbesondere mindestens 80% der Fasern, innerhalb von ±25°, insbesondere von ±15° parallel zu der Längsachse ausgerichtet.

In einer Ausführungsform sind die Verstrebungselemente so ausgebildet und innerhalb des Hüll-Elementes so angeordnet, dass durch den Höhlkörper Druckkräfte auf die Verstrebungselemente ausübbar sind.

Es sind die Verstrebungselemente so ausgebildet und innerhalb des Hüll-Elementes so angeordnet, dass durch den Höhlkörper keine Zugkräfte auf die Verstrebungselemente ausübbar sind.

In einer Ausführungsform ist das Konstruktionselement ein statisch tragendes Konstruktionselement, ein Tragelement.

In einer Ausführungsform ist das Konstruktionselement ein Bauelement, insbesondere für Gebäudebauten.

In einer Ausführungsform bestehen die Konstruktionselemente nur aus dem Hohlkörper und den Verstrebungselementen sowie gegebenenfalls mindestens einem Halte-Element, beispielsweise dem Hüll-Element. Das heisst, dass sie ansonsten höchstens noch ein Gas (im allgemeinen Luft) enthalten. Dadurch sind die Konstruktionselemente besonders leicht.

In einer Ausführungsform ist innerhalb des Hohlkörpers ein zusätzliches Material angeordnet, insbesondere eines, durch das eine Erhöhung der Wärmedämmung und/oder eine Erhöhung der Schalldämmung und/oder eine Erhöhung der Feuerfestigkeit bewirkt wird. Insbesondere ist der Hohlkörper mit diesem zusätzlichen Material gefüllt. Insbesondere bestehen die Konstruktionselemente nur aus dem Hohlkörper, den Verstrebungselementen und dem genannten zusätzlichen Material sowie gegebenenfalls mindestens einem Halte-Element, beispielsweise dem Hüll-Element, wobei sie ansonsten höchstens noch ein Gas (im allgemeinen Luft) enthalten.

In einer Ausführungsform ist der Hohlkörper äusserlich von im wesentlichen stab-, oder balken- oder brettartiger Form.

In einer Ausführungsform ist die Erstreckung des Hohlkörpers entlang der Längsachse mindestens 5mal oder 10mal oder 20mal so gross wie senkrecht dazu.

In einer Ausführungsform hat der Hohlkörper einen rechteckigen, insbesondere quadratischen Querschnitt, mit gerundeten oder ungerundeten Ecken.

In einer Ausführungsform beträgt die Diagonale des Querschnittes des Hohlkörpers mindestens 5 cm oder 10 cm und höchstens 6 m oder 4 m oder 1 m.

In einer Ausführungsform beträgt die Wandstärke des Hohlkörpers mindestens 0.5 mm oder 1 mm und höchstens 20 mm oder 10 mm.

In einer Ausführungsform erstrecken sich die Verstrebungselemente innerhalb des Hohlkörpers jeweils von einem Punkt eines ersten Querschnitts des Hohlkörpers zu einem bezüglich der Längsachse gegenüberliegenden Punkt eines zweiten Querschnitts des Hohlkörpers.

In einer Ausführungsform sind der erste Querschnitt und der zweite Querschnitt identisch; dies natürlich lediglich im Rahmen der Fertigungsgenauigkeit.

Auch die weiteren oben angeführten Ausführungsformen des Halbzeuges resultieren in entsprechenden Konstruktionselementen mit analogen Wirkungen und Vorteilen.

In einer Ausführungsform wird ein Konstruktionselement hergestellt, indem in einen Hohlkörper ein Halbzeug eingebracht wird.

Ein Hohlkörper kann beispielsweise dadurch erzeugt werden, dass in einem kontinuierlichen Herstellungsprozess ein Hohlkörperstrang erstellt und zu den Hohlkörpern zerteilt wird.

In einer Ausführungsform sind der Hohlkörper, das Hüll-Element und gegebenenfalls die Verstrebungselemente lichtdurchlässig. Dies ist bei Verwendung von Kunststoffen oder Kunststoff-Verbundwerkstoffen besonders einfach möglich.

Die Verwendung von Kunststoffen oder Kunststoff-Verbundwerkstoffen für den Hohlkörper und/oder das Hüll-Element und/oder die Verstrebungselemente ermöglicht es auf einfache Weise, die Konstruktionselemente in verschiedenen Farben herzustellen.

Das Flächenelement gemäss der Erfindung weist mehrere nebeneinander angeordnete und relativ zueinander befestigte, insbesondere miteinander verbundene oder aneinander befestigte Konstruktionselemente gemäss der Erfindung auf.

Das Flächenelement ist auch ein Konstruktionselement, insbesondere ein statisch tragendes Bauelement, ein Tragelement. Um dieses eher flächige Konstruktionselement von dem oben beschriebenen Konstruktionselement zu unterscheiden, wird es als Flächenelement bezeichnet.

In einer Ausführungsform ist das Flächenelement ein Bauelement, insbesondere für Gebäudebauten.

In einer typischen Ausführungsform ist das Flächenelement platten- oder scheibenförmig.

In einer Ausführungsform ist das Flächenelement ein Bodenelement.

In einer Ausführungsform ist das Flächenelement ein Deckenelement.

In einer Ausführungsform ist das Flächenelement ein Dachelement.

In einer Ausführungsform ist das Flächenelement ein Decken- oder Bodenelement.

In einer Ausführungsform des Flächenelementes sind die Konstruktionselemente im wesentlichen parallel zueinander angeordnet.

In einer Ausführungsform ist zwischen den Konstruktionselementen ein Füllmaterial angeordnet.

In einer Ausführungsform weist das Flächenelement ein oberhalb oder unterhalb der Konstruktionselemente angeordnetes Deckelement auf.

In einer Ausführungsform ist zwischen dem Deckelement und den Konstruktionselementen ein Füllmaterial angeordnet.

In einer Ausführungsform ist das Deckelement ein Gehbelag.

In einer Ausführungsform dient das Deckelement statischen Zwecken.

In einer Ausführungsform dient das Deckelement optischen Zwecken.

In einer Ausführungsform erstreckt sich das Deckelement über alle Konstruktionselemente.

In einer Ausführungsform wird das Deckelement zur Bildung des Flächenelementes schichtartig aufgetragen.

In einer Ausführungsform wird das Deckelement zur Bildung des Flächenelementes plattenartig aufgebracht.

In einer Ausführungsform wird das Deckelement zur Bildung des Flächenelementes als Ganzes vollflächig aufgebracht.

In einer Ausführungsform wird das Deckelement zur Bildung des Flächenelementes sequentiell in Teilen aufgebracht, insbesondere in Form von Teilen, die sich zur Vollfläche ergänzen, beispielsweise in Form von Streifen.

In einer Ausführungsform ist das Deckelement einschichtig ausgebildet.

In einer Ausführungsform ist das Deckelement mehrschichtig ausgebildet.

In einer Ausführungsform besteht das Deckelement zumindest zum Teil im wesentlichen aus einem Kunststoff, beispielsweise einem Kunststoff-Verbundwerkstoff, insbesondere einem faserverstärkten Kunststoff, insbesondere einem glasfaserverstärkten Kunststoff.

In einer Ausführungsform besteht das Deckelement zumindest zum Teil im wesentlichen aus Holz.

In einer Ausführungsform besteht das Deckelement zumindest zum Teil im wesentlichen aus einem Mörtel, beispielsweise einem Mörtel auf Zementbasis oder auf Kunststoffbasis.

In einer Ausführungsform weist das Flächenelement noch ein weiteres Deckelement auf, wobei die Konstruktionselemente zwischen den beiden Deckelementen angeordnet sind.

In einer Ausführungsform sind die beiden Deckelemente im wesentlichen parallel zueinander ausgerichtet.

In einer Ausführungsform weist das Deckelement (bzw. weisen die Deckelemente) Befestigungsmittel auf, zum Beispiel

Verzahnungselemente, beispielsweise solche, die im wesentlichen senkrecht zur Erstreckungsebene des Deckelementes (bzw. der Deckelemente) ausgerichtet sind.

In einer Ausführungsform mit zwei Deckelementen weisen die Deckelemente Befestigungsmittel auf, die sich von dem einen Deckelement zu dem weiteren Deckelement erstrecken. Derartige Verbindungselemente ermöglichen besonders stabile Flächenelemente.

In einer Ausführungsform mit zwei Deckelementen weist das Flächenelement zwei Konstruktionselemente auf, die voneinander senkrecht zu der Längsachse beabstandet angeordnet sind, ohne dass ein weiteres Konstruktionselement zwischen ihnen angeordnet ist. Derartige Flächenelemente können sehr gut als Trägerelemente, insbesondere als Biegeträger eingesetzt werden, insbesondere wenn sie genau zwei Konstruktionselemente aufweisen.

Die weiteren oben angeführten Ausführungsformen des Halbzeuges und des Konstruktionselementes resultieren in entsprechenden Flächenelementen mit analogen Wirkungen und Vorteilen.

Das Verfahren gemäß des Anspruchs 15 zur Herstellung eines Flächenelementes ist dadurch gekennzeichnet, dass mindestens ein Halbzeug gemäß des Anspruchs 1 mit einem Fasermaterial umgeben wird und mehrere derartige mit Fasermaterial umgebene Halbzeuge nebeneinander angeordnet werden, und dass ein Füllmaterial in das Fasermaterial eingebracht und gehärtet wird.

Mittels eines solchen Verfahrens können Flächenelemente gemäss der Erfindung hergestellt werden.

Durch ein solches Verfahren ist es möglich, auf eine vorgängige (separate) Fertigung von Konstruktionselementen zu verzichten. Weiter ermöglicht es ein solches Verfahren, das Erstellen von Konstruktionselementen und das Verbinden der Konstruktionselemente gemeinsam durchzuführen, also im wesentlichen in demselben Prozess durchzuführen. Mit anderen Worten werden die Konstruktionselemente in demselben Prozess gebildet und miteinander verbunden.

Die genannten Kanten des Quaders (erste bis vierte Kante) sind miteinander nicht identisch.

In einer Ausführungsform des Verfahrens weist das Halbzeug mindestens ein Halte-Element auf, wobei die Verstrebungselemente durch das mindestens eine Halte-Element miteinander verbunden sind.

In einer Ausführungsform des Verfahrens sind die verwendeten Halbzeuge Halbzeuge der eingangs beschriebenen Art. In diesem Fall weist das mindestens eine Halte-Element also ein Hüll-Element der eingangs beschriebenen Art auf.

In einer Ausführungsform des Verfahrens weist das mindestens eine Halte-Element mehrere Verbindungs-Elemente auf, durch welche Abschnitte der Kanten des Quaders gebildet sind, insbesondere solche Abschnitte, die jeweils zwischen zwei Abschnitten angeordnet sind, in denen die Kanten des Quaders jeweils durch ein Verstrebungselement gebildet sind.

In einer Ausführungsform des Verfahrens weist das mindestens eine Halte-Element mehrere im wesentlichen an den Kanten des Quaders angeordnete Verbindungs-Elemente auf, insbesondere stabartige Verbindungs-Elemente und/oder im wesentlichen parallel zu der Längsachse ausgerichtete Verbindungs-Elemente. Durch derartige Verbindungs-Elemente sind jeweils zwei benachbart angeordnete Verstrebungselemente miteinander verbunden oder sind jeweils zwei benachbart angeordnete erste Verstrebungselemente oder jeweils zwei benachbart angeordnete zweite Verstrebungselemente miteinander verbunden. Dadurch können die Verstrebungselemente relativ zueinander in ihrer Position gehalten werden.

In einer Ausführungsform des Verfahrens werden mehrere mit Fasermaterial umgebene Halbzeuge erzeugt, indem ein mit Fasermaterial umgebenes Halbzeug zerteilt wird, typischerweise im wesentlichen senkrecht zu der Längsachse. Dadurch, dass ein besonders langes Halbzeug statt mehrerer kürzerer Halbzeuge mit Fasermaterial umgeben wird, muss weniger oft Fasermaterial aufgebracht werden, was den Herstellungsprozess verkürzt.

In einer Ausführungsform des Verfahrens werden Halbzeuge mit dem Fasermaterial umwickelt.

In einer Ausführungsform wird das Fasermaterial im wesentlichen durch Fasermatten, durch Prepreg-Material, insbesondere durch Prepregs gebildet. Es können die gleichen Sorten Fasern verwendet werden, wie sie weiter oben genannt sind als Fasern für Verstrebungselemente.

In einer Ausführungsform ist das Füllmaterial ein Harz. Es können die gleichen Sorten Kunststoffe verwendet werden, wie sie weiter oben genannt sind als Kunststoffe für Verstrebungselemente.

In einer Ausführungsform des Verfahrens wird zum Einbringen des Füllmaterials in das Fasermaterial an dem Fasermaterial ein Unterdruck erzeugt. Dadurch werden Luft- oder sonstige Gaseinschlüsse minimiert und das Füllmaterial verdichtet, so dass eine hohe Stabilität erreicht wird.

In einer Ausführungsform des Verfahrens wird zumindest ein Abschnitt der mit Fasermaterial umgebenen Halbzeuge zwischen zwei Begrenzungen angeordnet und zwischen den Begrenzungen der Unterdruck erzeugt, während jenseits mindestens einer der Begrenzungen sowie innerhalb der Halbzeuge höherer Druck herrscht. Dadurch wird eine hohe Faserdichte und somit eine hohe Stabilität erreicht.

In einer Ausführungsform des Verfahrens sind die Begrenzungen ober- bzw. unterhalb der mit dem Fasermaterial umgebenen Halbzeuge angeordnet.

In einer Ausführungsform des Verfahrens ist der höhere Druck Normaldruck.

In einer Ausführungsform des Verfahrens sind die Begrenzungen flächig, insbesondere im wesentlichen plan ausgebildet.

In einer Ausführungsform des Verfahrens wird eine der Begrenzungen oder werden beide Begrenzungen zumindest zum Teil durch das oder die Deckelemente gebildet.

In einer Ausführungsform des Verfahrens wird zumindest ein Abschnitt der mit Fasermaterial umgebenen Halbzeuge in einen evakuierbaren Behälter eingebracht.

Andererseits ist es auch möglich, zur Herstellung eines Flächenelementes zunächst Konstruktionselemente zu fertigen und diese dann aneinander zu befestigen, beispielsweise durch Verkleben, durch Verschweissen oder durch Laminieren, insbesondere durch Zusammen- oder Aneinanderlaminieren, oder durch mechanisches Miteinander-Verbinden, beispielsweise durch Formschluss oder mittels Befestigungsmitteln. Das Aneinander-Befestigen, beispielsweise durch Verkleben, kann punktweise, streifenweise oder auch vollflächig erfolgen.

Ein Befestigen von Deckelementen mit den Konstruktionselementen kann beispielsweise durch Verkleben oder durch Verschweissen, insbesondere durch Aufschweissen des Deckelementes auf die Konstruktionselemente erreicht werden, oder durch Laminieren, insbesondere durch Auflaminieren des Deckelementes auf die Konstruktionselemente, oder durch mechanisches Miteinander-Verbinden, beispielsweise durch Formschluss oder mittels Befestigungsmitteln.

Die Erfindung umfasst grundsätzlich auch Konstruktionselemente und Flächenelemente mit Merkmalen, die den Merkmalen der beschriebenen Verfahren entsprechen.

Weitere Ausführungsformen und Vorteile gehen aus den abhängigen Patentansprüchen und den Figuren hervor.

### Kurze Beschreibung der Zeichnungen

Im folgenden wird der Erfindungsgegenstand anhand von Ausführungsbeispielen und den beiliegenden Zeichnungen näher erläutert. Es zeigen:
- Fig. 1: ein Konstruktionselement, geschnitten senkrecht zur Längsachse;
- Fig. 2: das Konstruktionselement gemäss Fig. 1, geschnitten parallel zur Längsachse;
- Fig. 3: ein Flächenelement, geschnitten senkrecht zur Längsachse der Konstruktionselemente;
- Fig. 4: ein Flächenelement mit Füllmaterial, geschnitten senkrecht zur Längsachse der Konstruktions-elemente;
- Fig. 5: ein Flächenelement mit Deckelement mit Verzahnungselementen, geschnitten senkrecht zur Längsachse der Konstruktionselemente, schematisiert;
- Fig. 6: ein Flächenelement mit Deckelement mit Verbindungselementen, geschnitten senkrecht zur Längsachse der Konstruktionselemente, schematisiert;
- Fig. 7: eine Veranschaulichung eines Herstellungsverfahrens für ein Flächenelement;
- Fig. 8: ein Konstruktionselement mit stab- oder brettförmigem Verstrebungselement, geschnitten senkrecht zur Längsachse, schematisiert;
- Fig. 9: ein Konstruktionselement mit kreuzförmigem Verstrebungselement, geschnitten senkrecht zur Längsachse, schematisiert;
- Fig. 10: ein Konstruktionselement mit scheibenförmigem Verstrebungselement, geschnitten senkrecht zur Längsachse, schematisiert;
- Fig. 11: ein Konstruktionselement mit kreuzförmigem Verstrebungselement, geschnitten senkrecht zur Längsachse, schematisiert;
- Fig. 12: das kreuzförmige Verstrebungselement aus Fig. 11, geschnitten parallel zu der Längsachse, in Aufsicht, schematisiert;
- Fig. 13: ein stabförmiges Verstrebungselement in einer Ansicht senkrecht zu der Längsachse eines Konstruktionselementes, schematisiert;
- Fig. 14: das stabförmiges Verstrebungselement aus Fig. 13 in einer Ansicht parallel zu der Längsachse eines Konstruktionselementes, schematisiert;
- Fig. 15: ein Verstrebungselement zur Bildung einer Kette ineinandergreifender Verstrebungselemente, in Aufsicht;
- Fig. 16: das Verstrebungselement aus Fig. 15, in einer Ansicht entlang der Längsachse;
- Fig. 17: eine Kette ineinandergreifender Verstrebungs-elemente gemäss Figs. 15 und 16, in Aufsicht;
- Fig. 18: ein Verstrebungselement zur Bildung eines Paares ineinandergreifender Verstrebungselemente, in Aufsicht;
- Fig. 19: das Verstrebungselement aus Fig. 18, in einer Ansicht entlang der Längsachse;
- Fig. 20: ein Halbzeug mit Paaren von Verstrebungselementen gemäss Figs. 18,19, in einer Ansicht entlang der Längsachse;
- Fig. 21: ein sternförmiges strebenverstärktes Verstrebungselement, in einer Ansicht entlang der Längsachse;
- Fig. 22: eine Sicht auf einen Detail-Schnitt des Verstrebungselementes aus Fig. 21, entlang der mit XXII gekennzeichneten Linie in Fig. 21;
- Fig. 23: ein Halbzeug mit beabstandeten Verstrebungs-elementen aus Figs. 21,22, in einer Aufsicht senkrecht zur Längsachse;
- Fig. 24: ein Hüll-Element mit Sicken, schematisiert;
- Fig. 25: eine Veranschaulichung der Wirkung von Sicken in einem Hüll-Element;
- Fig. 26: ein Halbzeug mit Verstrebungselementen aus Figs. 21,22, die durch Verbindungselemente miteinander verbunden sind, in einer Aufsicht senkrecht zur Längsachse;
- Fig. 27: ein Halbzeug mit Verstrebungselementen, die durch Verbindungselemente miteinander verbunden sind, in einer Schnitt-Ansicht entlang der Längsachse;
- Fig. 28: ein Flächenelement mit beabstandeten Konstruktionselementen, geschnitten senkrecht zur Längsachse der Konstruktionselemente;
- Fig. 29: ein Trägerelement, geschnitten senkrecht zur Längsachse der Konstruktionselemente.

Die in den Zeichnungen verwendeten Bezugszeichen und deren Bedeutung sind in der Bezugszeichenliste zusammengefasst aufgelistet. Für das Verständnis der Erfindung nicht wesentliche Teile sind zum Teil nicht dargestellt. Die beschriebenen Ausführungsbeispiele stehen beispielhaft für den Erfindungsgegenstand und haben keine beschränkende Wirkung.

### Wege zur Ausführung der Erfindung

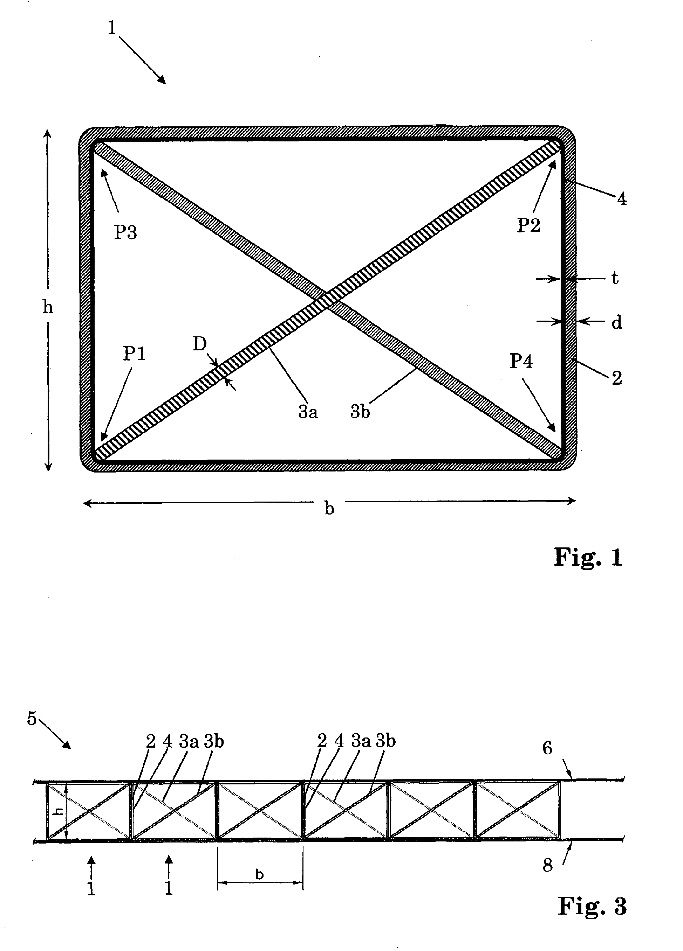

Fig. 1 zeigt, in einem Schnitt senkrecht zu seiner Längsachse, ein Konstruktionselement 1, das als ein Tragelement verwendet werden kann, beispielsweise für statische Zwecke zum Bau von Gebäuden. Das Konstruktionselement 1 weist auf: einen entlang der genannten Längsachse erstreckten Hohlkörper 2, wobei die Längsachse senkrecht zur Zeichenebene steht, eine Vielzahl von Verstrebungselementen 3a,3b sowie ein Hüll-Element 4. Der Hohlkörper 2 ist im wesentlichen rohrartig ausgebildet und weist einen rechteckigen Querschnitt auf, mit gerundeten Ecken und einer Höhe h und einer Breite b jeweils zwischen 10 cm und 40 cm und einer Wandstärke d zwischen 2 mm und 8 mm. Die Länge des Hohlkörpers 2 kann ganz unterschiedlich gewählt werden, typischerweise einige zehn Zentimeter bis einige Meter.

Die Verstrebungselemente 3a,3b sind innerhalb des innerhalb des Hohlkörpers 2 angeordneten Hüll-Elementes 4 angeordnet und verlaufen jeweils entlang einer der Diagonalen des Hohlkörperquerschnitts und somit senkrecht zu der Längsachse. Das Verstrebungselement 3a verläuft von einem Punkt P1 zu einem Punkt P2. Es ist im wesentlichen stabförmig ausgebildet mit einem Durchmesser D von 3 mm bis 6 mm. An den Punkten P1 und P2 steht das Verstrebungselement 3a am Hohlkörper 2 an, wobei dazwischen das Hüllelement 4 angeordnet ist. Auf diese Weise, also weil das Verstrebungselement 3a nicht am Hohlkörper 2 befestigt ist, kann das Verstrebungselement 3a keine Zugkräfte, sondern nur Druckkräfte aufnehmen. Bei P1 und P2 ist die Form des Endes des Verstrebungselementes 3a an die Form der Innenkante des Hohlkörpers 2 (also an die Geometrie der gerundeten Kante des Hohlkörpers 2) angepasst. Durch eine solche Passform wird eine gute Stabilität und Kraftübertragung zwischen Hohlkörper 2 und Verstrebungselement 3a gewährleistet. Das Verstrebungselement 3b ist gleichartig ausgebildet wie das soeben beschriebene Verstrebungselement 3a und zu diesem beabstandet angeordnet. Es verläuft von einem Punkt P3 bis zu einem Punkt P4 entlang der anderen Diagonalen des Hohlkörpers 2, in einem parallelen, entlang der Längsachse beabstandeten Querschnitt.

Das Hüll-Element 4 ist schlauchartig ausgebildet und deutlich dünnwandiger als der Hohlkörper 2; seine Wandstärke beträgt zwischen 0.01 mm und 2 mm, typischerweise zwischen 0.1 mm und 1 mm. Das Hüll-Element 4 ist beispielsweise durch eine Folie gebildet, die zur Ummantelung der Verstrebungselemente 3a,3b auf eine Anordnung selbiger aufgeschrumpft ist, wodurch ein Halbzeug gebildet wird. Das Hüll-Element 4 kann auch erstellt werden, indem eine Folie wickelnd aufgebracht wird.

Das aus Hüll-Element 4 und Verstrebungselementen 3a,3b gebildete Halbzeug kann in den Hohlkörper 2 eingebracht werden, oder der Hohlkörper 2 kann mithilfe des Halbzeugs gebildet werden. Mehr dazu weiter unten.

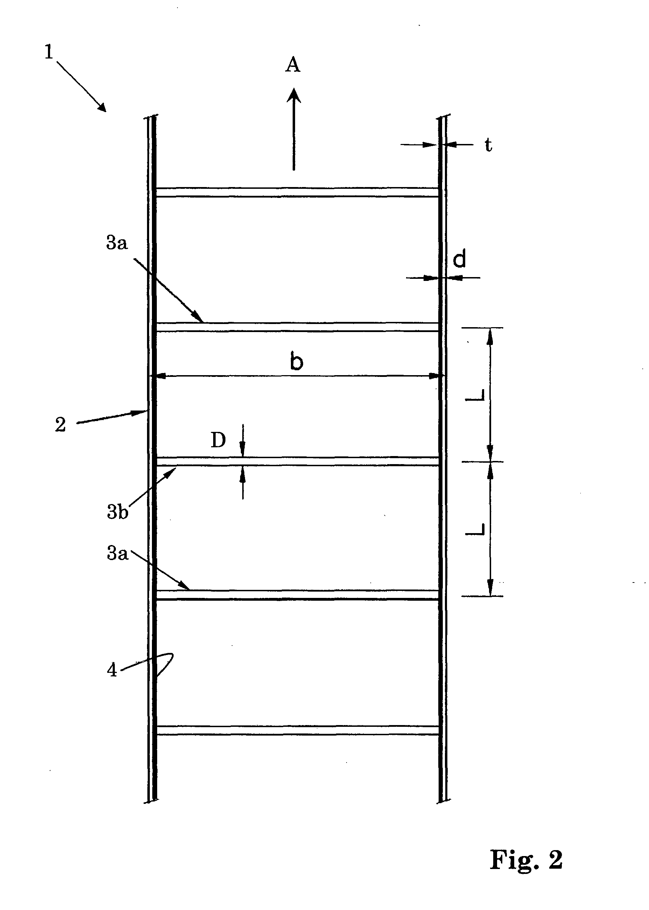

Fig. 2 zeigt das Konstruktionselement 1 von Fig. 1 in einem Schnitt parallel zu der Längsachse. Die Längsachse ist mit dem Bezugszeichen A bezeichnet. Die Verstrebungselemente 3a und 3b sind einander abwechselnd periodisch angeordnet, wobei Verstrebungselemente 3a bzw. 3b in einem Abstand L auf Verstrebungselemente 3b bzw. 3a folgen, so dass die Verstrebungselemente abwechselnd entlang der einen und der anderen Diagonalen erstreckt sind. Es ist nicht notwendig, gleiche Abstände zwischen benachbarten Verstrebungselementen vorzusehen. Es ist auch nicht notwendig, dass jedes Verstrebungselement 3a mit einem Verstrebungselement 3b benachbart ist; beispielsweise können auf ein oder mehrere Verstrebungselemente 3a mehrere Verstrebungselemente 3b folgen. Vorteilhaft sind auf einer entlang der Längsachse A verlaufenden Strecke einer Länge zwischen einmal und dreissigmal der Diagonalenlänge des Konstruktionselementes 1 mindestens ein Verstrebungselement 3a und mindestens ein Verstrebungselement 3b angeordnet.

Je nachdem, wie das Hüll-Element 4 ausgebildet ist, liegt es im wesentlichen vollflächig an den Innenflächen des Hohlkörpers 2 an (vgl. Figs. 1 und 2), oder es ist teilweise von den Innenflächen des Hohlkörpers 2 beabstandet. Im allgemeinen liegt das Hüll-Element 4 zumindest dort an den Innenkanten des Hohlkörpers 2 sowie an daran angrenzenden Teilflächen der Innenflächen des Hohlkörpers 2 an oder ist dort nur geringfügig beabstandet, wo vorgesehen ist, dass die Verstrebungselemente 3a,3b mit dem Höhlkörper zusammenwirken, also im Bereich der Punkte P1, P2, P3, P4 (vgl. Fig. 1).

Sowohl der Hohlkörper 2 als auch die Verstrebungselemente 3a,3b sind aus einem faserverstärkten, insbesondere glasfaserverstärkten Kunststoff gefertigt, wobei für die Verstrebungselemente 3a,3b auch Holz, Keramik, Glas oder Beton oder andere Materialien hoher Druckfestigkeit verwendbar sind. Durch die jeweils im wesentlichen quer zur Erstreckung des Hohlkörpers (also quer zur Längsachse A) erstreckten Verstrebungselemente 3a,3b wird ein sehr leichtes, auf Druck belastbares und für viele Applikationen wie zum Beispiel für Decken und Böden, für Brücken, Gerüste, Eventbauten oder Plattformen verwendbares Konstruktionselement mit hohem Nutzlast-zu-Eigengewicht-Verhältnis ( > 4:1) geschaffen.

Es ist möglich, aus mehreren dieser eher länglichen Konstruktionselemente 1, wie sie beispielhaft in Figs. 1 und 2 dargestellt sind, flächige Konstruktionselemente zu erstellen.

In Fig. 3 ist ein solches Flächenelement 5 in einem Schnitt senkrecht zu der Längsachse der Konstruktionselemente 1 gezeigt. Ein mögliches Herstellungsverfahren für ein solches Flächenelement 5 gestaltet sich wie folgt:
Die optional vorfabrizierten Konstruktionselemente 1 werden parallel zueinander angeordnet und zum Beispiel durch Verkleben aneinander befestigt. Ein vorgängiges Herstellen der Konstruktionselemente 1 erfolgt beispielsweise durch Herstellung eines Hohlkörperstrangs in einem kontinuierlichen Prozess und Zerteilen desselben zur Erstellung der Hohlkörper 2 sowie Einbringen der (in Fig. 3 nicht als solche gekennzeichneten) ebenfalls vorfabrizierten Halbzeuge. Ober- und unterhalb des so erstellten flächigen Gebildes aus Konstruktionselementen 1 wird jeweils ein Deckelement 6 bzw. 8 angebracht, zum Beispiel aufgeklebt oder auflaminiert. Die Deckelemente 6,8 können einer Verbesserung der statischen Eigenschaften des Flächenelementes 5 und/oder als Verkleidung (zu optischen Zwecken) dienen. Derartige Flächenelemente 5 können beispielsweise als Böden oder Decken oder Bodenelemente oder Deckenelemente verwendet werden und haben Flächeninhalte von zum Beispiel etwa 1 m² und bis etwa 100 m².

Die Deckelemente 6,8 können einschichtig oder mehrschichtig (sandwichartig) ausgebildet sein und zum Beispiel plattenweise aufgebracht werden, beispielsweise in Form einer Platte aus einem glasfaserverstärkten Kunststoff.

Es ist möglich, in einem Flächenelement 5 ausser Konstruktionselementen 1 und Deckelementen 6 und/oder 8 auch noch ein Füllmaterial vorzusehen. Dieses kann zwischen benachbarten Konstruktionselementen 1 und/oder zwischen den Konstruktionselementen 1 und einem oder beiden Deckelementen 6,8 vorgesehen werden. Innerhalb der Hüll-elemente 4 soll kein solches Füllmaterial 7 vorgesehen werden.

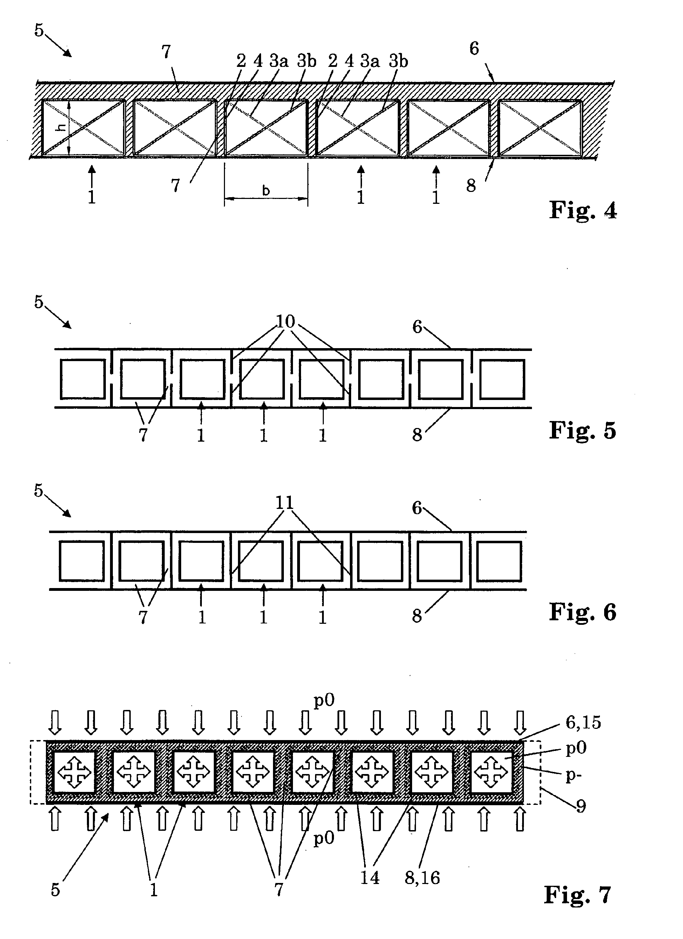

Fig. 4 zeigt ein solches Flächenelement 5 mit einem Füllmaterial 7 in einem Schnitt senkrecht zur Längsachse A der Konstruktionselemente 1. Durch das Füllmaterial 7 kann beispielsweise ein Druckgurt gebildet werden (zum Beispiel in Fig. 4 zwischen den Konstruktionselementen 1 und dem Deckelement 6). Das Füllmaterial 7 kann auch Schubkräfte zwischen den Konstruktionselementen 1 aufnehmen.

Als Füllmaterial 7 kommen zum Beispiel fliessfähige härtbare Materialien in Frage, wie zum Beispiel Mörtel, Beton, Kunstharze, Klebstoffe oder andere Vergussmassen. Das Füllmaterial kann auch die Funktion übernehmen, die Konstruktionselemente 1 aneinander und/oder an allfälligen Deckelementen 6,8 zu befestigen.

Fig. 5 zeigt in schematisierter Form (unter Nicht-Darstellung von Verstrebungselementen und eventuellen Hüll-Elementen) einen Schnitt senkrecht zur Längsachse der Konstruktionselemente 1 durch ein Flächenelement 5 mit Deckelementen 6,8, die Befestigungsmittel in Form von Verzahnungselementen 10 aufweisen. Solche Verzahnungselemente 10 ragen aus der durch das Flächenelement 5 gebildeten Fläche heraus in Richtung der Konstruktionselemente 1 oder sogar, wie in Fig. 5 dargestellt, bis zwischen die Konstruktionselemente 1. Sie dienen einer verbesserten (stärkeren) Verbindung zwischen Deckelement 6,8 und Füllmaterial 7, so dass das ganze Flächenelement 5 haltbarer und stabiler wird.

Fig. 6 zeigt in gleicher Weise wie Fig. 5 einen Schnitt senkrecht zur Längsachse der Konstruktionselemente 1 durch ein Flächenelement 5 mit Deckelementen 6,8, die Befestigungsmittel in Form von Verbindungselementen 11 aufweisen. Die Verbindungselemente 11 verlaufen durch das Füllmaterial 7 und verbinden beiden Deckelemente 6 und 8 miteinander. Auch dadurch wird das ganze Flächenelement 5 haltbarer und stabiler.

Fig. 7 ist eine Veranschaulichung eines speziellen Herstellungsverfahrens für ein Flächenelement 5, durch eine Schnitt-Skizze senkrecht zur Längsachse der Konstruktionselemente 1. Zunächst werden in Fig. 7 nicht dargestellte Halbzeuge durch Ummanteln einer Verstrebungselement-Anordnung mit einem Hüll-Element oder das Vorsehen von anderen Halte-Elemente, zum Beispiel Verbindungselemente erzeugt (mehr zu Halte-Elementen und Verbindungselemente folgt weiter unten). Jedes der Halbzeuge wird mit einem Fasermaterial 14 umgeben (in Fig. 7 durch Punkte dargestellt), beispielsweise mit einer Glasfasermatte oder einem Prepreg umwickelt.

In einen in Fig. 7 nur schematisch dargestellten evakuierbaren Behälter 9 wird zunächst ein Deckelement 8 eingebracht, das als eine Begrenzung 16 dient. Es ist auch möglich, auf ein Deckelement 8 zu verzichten und einen Teil des Behälters 9 als Begrenzung 16 zu verwenden. Auf die Begrenzung 16 werden die mit dem Fasermaterial 14 versehenen Halbzeuge in gewünschter Art und Weise angeordnet. Falls, wie in Fig. 7 dargestellt, Zwischenräume zwischen den Halbzeugen vorgesehen sein sollten, werden diese mit einem Füllmaterial 7 gefüllt. Danach wird eine Begrenzung 15, optional durch ein Deckelement 6 gebildet, darauf aufgebracht.

Der Behälter 9 wird dann (zwischen den Begrenzungen 15 und 16) evakuiert, um einerseits eine gute Verdichtung des Fasermaterials 14 zu erreichen und andererseits, um Füllmaterial 7 aus einem Vorratsvolumen in den Behälter 9 einzusaugen und in das Fasermaterial 14 einzufügen, wodurch das Fasermaterial 14 möglichst ohne Lufteinschlüsse von Füllmaterial 7 durchdrungen wird. Anschliessend wird zumindest das eingesaugte Füllmaterial 7 gehärtet. Das Härten kann zum Beispiel ohne weiteres Zutun geschehen oder ein Erwärmen des Füllmaterials beinhalten.

Es wird darauf hingewiesen, dass das in dem Vakuumprozess eingesaugte Füllmaterial 14 ein anderes Füllmaterial sein kann als das Füllmaterial, das optional zwischen den oder unter- oder oberhalb der Halbzeuge angeordnet wird.

Dadurch, dass das Innere des Behälters 9 einen Unterdruck p- aufweist bei Normaldruck p0 ausserhalb der Begrenzungen 15,16, wirken Kräfte, die in Fig. 7 durch offene Pfeile symbolisiert sind, und die die Hüll-Elemente nach aussen ziehen und die Begrenzungen 15,16 zusammenpressen.

Durch dieses Verfahren werden gleichzeitig die Konstruktionselemente 1 und das Flächenelement 5 erzeugt. Ein vorgängiges Komplett-Erstellen der Konstruktionselemente 1 ist nicht notwendig und kann somit entfallen; das vorgängige Erstellen der Halbzeuge ist ausreichend. Die Hohlkörper entstehen gleichzeitig mit dem Flächenelement 5 und werden auch gleichzeitig miteinander verbunden.

Flächenelemente, die auf diese Weise erstellt sind, haben im allgemeinen die Eigenschaft, dass Hüll-Elemente und Hohlkörper miteinander im wesentlichen vollflächig verbunden sind.

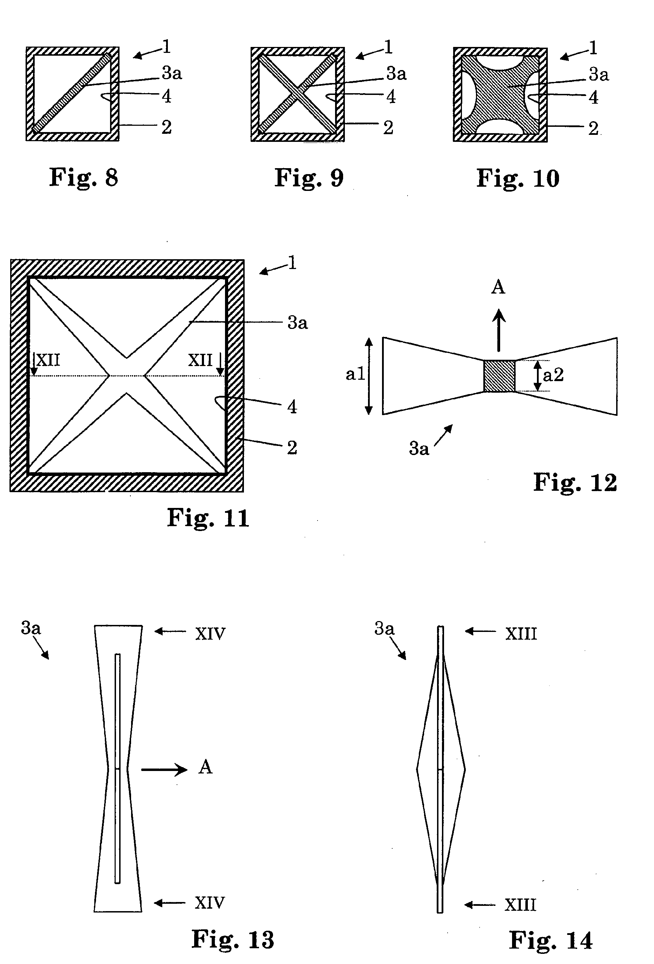

Mit den Figs. 8 bis 24 kommen wir zurück auf die Konstruktionselemente 1 und die Halbzeuge, genauer auf verschiedene Möglichkeiten, die Verstrebungselemente 3a,3b auszubilden.

Fig. 8 zeigt schematisiert in einem Schnitt senkrecht zur Längsachse des Hohlkörpers 2 ein stab- oder brettförmiges Verstrebungselement 3a in einem Hohlkörper 2, wobei ein eventuell vorhandenes Hüll-Element 4 nicht dargestellt ist. Wie im Zusammenhang mit Figs. 1 und 2 erläutert, können solche Verstrebungselemente abwechselnd entlang der einen und der anderen Diagonale von Querschnitten des Hohlkörpers 2 ausgerichtet sein (ein Verstrebungselement 3b ist in Fig. 8 nicht dargestellt). Der Querschnitt des Verstrebungselementes 3a kann über die Länge des Verstrebungselementes 3a im wesentlichen konstant sein oder variieren. Erhöht man die Ausdehnung des Verstrebungselementes 3a in Richtung der Längsachse (senkrecht zur Zeichenebene), um ein eher brett-artiges Verstrebungselement 3a zu erhalten, so wird eine bessere Druckübertragung von der einen Hohlkörperkante zu der gegenüberliegenden Hohlkörperkante erreicht. Eine deutlich vergrösserte Biegesteifigkeit oder Biegefestigkeit kann beispielsweise erreicht werden, indem die Ausdehnung des Verstrebungselementes 3a in Richtung senkrecht zur Längsachse erhöht wird.

Fig. 9 zeigt in gleicher Weise wie Fig. 8 schematisiert in einem Schnitt senkrecht zur Längsachse des Hohlkörpers 2 ein kreuzförmiges Verstrebungselement 3a in einem Hohlkörper 2. Das Verstrebungselement 3a erstreckt sich entlang beider Diagonalen des Querschnittes des Hohlkörpers 2; alle vier Kanten des Hohlkörpers 2 wechselwirken mit demselben Verstrebungselement 3a. Der Querschnitt des Verstrebungselementes 3a kann im wesentlichen konstant sein oder variieren. Das Verstrebungselement 3a aus Fig. 9, wie auch die weiter unten in Figs. 10, 11, 12, 21, 22, 23, 26 dargestellten Verstrebungselemente, erstreckt sich also nicht, wie die zuvor beschriebenen Verstrebungselemente, nur von einer Kante des Hohlkörpers 2 zu der bzgl. der Längsachse gegenüberliegenden Kante des Hohlkörpers 2, sondern zusätzlich auch noch von einer weiteren Kante des Hohlkörpers 2 zu der Kante des Hohlkörpers 2, die dieser entlang der anderen Diagonalen gegenüberliegt,

Fig. 10 zeigt in gleicher Weise wie Fig. 8 schematisiert in einem Schnitt senkrecht zur Längsachse des Hohlkörpers 2 ein scheibenförmiges Verstrebungselement 3a in einem Hohlkörper 2, das nahe den Seitenmitten des Querschnittes des Hohlkörpers 2 Ausnehmungen aufweist. Das dargestellte Verstrebungselement 3a erstreckt sich über den überwiegenden Teil des Querschnittes des Hohlkörpers 2. Es ist auch möglich, keine Ausnehmungen vorzusehen oder, alternativ, die Ausnehmungen an anderen Stellen des scheibenförmigen Verstrebungselementes 3a vorzusehen, wobei von Ausnehmungen an den Ecken, also an den Kanten des Konstruktionselementes 1, abzusehen ist.

Fig. 11 zeigt schematisiert in einem Schnitt senkrecht zur Längsachse des Hohlkörpers 2 ein spezielles kreuzförmiges Verstrebungselement 3a in einem Hohlkörper 2. Fig. 12 zeigt das Verstrebungselement 3a von Fig. 11 in einem Schnitt parallel zur Längsachse A des Hohlkörpers 2 entlang der in Fig. 11 mit XII angeschriebenen gepunkteten Linie.

Bezüglich einer parallel zur Längsachse A verlaufenden Koordinate hat das Verstrebungselement 3a eine sich vom Berührungsort mit dem Hohlkörper 2 zur Mitte des Hohlkörpers 2 hin im wesentlichen verjüngende Ausdehnung (vgl. Fig. 12, von Länge a1 zu Länge a2). Zusätzlich nimmt die Dicke des Verstrebungselementes 3a innerhalb eines Schnittes senkrecht zur Längsachse des Hohlkörpers 2 vom Berührungsort mit dem Hohlkörper 2 zur Mitte des Hohlkörpers 2 hin im wesentlichen zu (vgl. Fig. 11). Dadurch kann bei geringem Materialaufwand und entsprechend geringem Gewicht eine grosse Stabilität erreicht werden: das Verstrebungselement 3a widersteht selbst grossen Druckkräften, biegt sich aber kaum und kippt auch nicht aus seiner zur Längsachse A senkrechten Position, und ausserdem ist die Druckbelastung in den Kanten des Hohlkörpers 2 gering, da über die Länge a1 verteilt.

Fig. 13 zeigt schematisiert ein spezielles stabförmiges Verstrebungselement 3a in einer Ansicht senkrecht zur Längsachse A. Die Längsachse A bezieht sich auch weiterhin auf den Zustand, in dem das Verstrebungselement 3a in einem Hohlkörper 2 bzw. einem Halbzeug eingebaut ist, wobei die Längsachse A die des Halbzeuges, des Hohlkörpers 2 und somit auch des gebildeten Konstruktionselementes ist. Fig. 14 zeigt schematisiert das Verstrebungselement 3a aus Fig. 13 in einer Ansicht parallel zur Längsachse A. Die mit XIV bzw. XIII angeschriebenen Pfeile geben jeweils die Ansicht an, in der die jeweils andere Figur dargestellt ist.

Wie für das Verstrebungselement 3a aus Figs. 11,12 gilt auch für das Verstrebungselement 3a aus Figs. 13,14: Bezüglich einer parallel zur Längsachse A verlaufenden Koordinate hat das Verstrebungselement 3a eine sich vom Berührungsort mit dem Hohlkörper 2 zur Mitte des Hohlkörpers 2 hin im wesentlichen verjüngende Ausdehnung (vgl. Fig. 13). Zusätzlich nimmt die Dicke des Verstrebungselementes 3a innerhalb eines Schnittes senkrecht zur Längsachse des Hohlkörpers 2 vom Berührungsort mit dem Hohlkörper 2 zur Mitte des Hohlkörpers 2 hin im wesentlichen zu (vgl. Fig. 14). Entsprechend wird auch bei einem solchen stabförmigen Verstrebungselement 3a bei geringem Gewicht eine grosse Stabilität erreicht.

Wie bei den in Figs. 1 und 2 beschriebenen Verstrebungselementen 3a,3b kann die Form der in den Figs. 8 bis 14 beschriebenen Verstrebungselemente 3a an den Stellen, die mit dem Hohlkörper in Berührung kommen und in Wechselwirkung treten, der dortigen Form des Hohlkörpers 2 angepasst sein. Für innengerundete Hohlkörperkanten kommen also endgerundete Verstrebungselemente 3a und ggf. 3b in Frage und für innen rechtwinklige Hohlkörperkanten Verstrebungselemente 3a und ggf. 3b mit entsprechend rechtwinkligem Profil. Dies gilt ebenso für die im folgenden beschriebenen Verstrebungselemente.

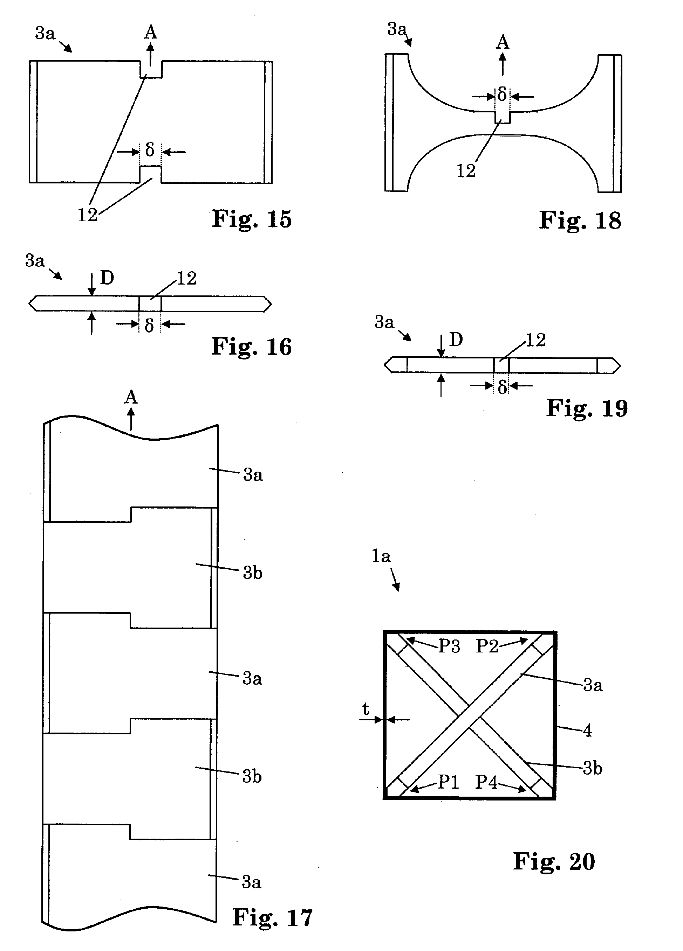

Fig. 15 zeigt in Aufsicht ein Verstrebungselement 3a zur Bildung einer Kette ineinandergreifender Verstrebungselemente. Fig. 16 zeigt das Verstrebungselement 3a aus Fig. 15 in einer Ansicht entlang der Längsachse A. Das Verstrebungselement 3a ist im wesentlichen Quader- oder plattenförmig, hat Kanten, die den Innenkanten eines Hohlkörpers angeformt sind, in welchem das Verstrebungselement verwendet werden soll, und weist zwei Nuten 12 auf, wobei das Verstrebungselement 3a an jeder der beiden Nuten 12 mit einem weiteren typischerweise gleichartig aufgebauten Verstrebungselement ineinandergreifen kann, so dass Nut in Nut greift. Ein Verstrebungselement 3a gemäss Figs. 15,16 kann auch Ausnehmungen aufweisen, wodurch bei reativ geringem Stabilitätsverlust relativ viel Material und somit Gewicht eingespart werden kann.

Fig. 17 zeigt in Aufsicht eine solcherart erzeugte Kette ineinandergreifender Verstrebungselemente gemäss Figs. 15 und 16.

Bei den Nuten 12 kann ein Spiel vorgesehen werden, das eine Beweglichkeit eines Verstrebungselementes 3a relativ zu einem mit ihm in Eingriff stehenden Verstrebungselement 3b erlaubt und umgekehrt. Ein solches Spiel ergibt sich als die Differenz Spaltbreite δ der Nut 12 minus Dicke D des Verstrebungselementes und beträgt typischerweise 0.05 bis 3 mm.

Dadurch sind benachbarte ineinandergreifende Verstrebungselemente bezüglich ihrer jeweiligen Druckaufnahme zumindest weitgehend entkoppelt, aber ein Biegen des Verstrebungselementes 3a (in einer Richtung senkrecht zur Längsachse A) wird erschwert oder auf eine (durch das genannte Spiel) vorgebbare Maximalbiegung begrenzt.

Durch das Ineinandergreifen in den Nuten 12 wird eine erhöhte Stabilität bei geringem Gewicht erreicht. Wie aus dem Beispiel gemäss Figs. 15 bis 17 ersichtlich, können als Verstrebungselemente 3a und 3b Gleichteile eingesetzt werden.

Fig. 18 zeigt in Aufsicht ein Verstrebungselement 3a zur Bildung eines Paares ineinandergreifender Verstrebungselemente. Fig. 19 zeigt das Verstrebungselement 3a aus Fig. 18, in einer Ansicht entlang der Längsachse A. Das Verstrebungselement 3a ist im wesentlichen plattenartig ausgebildet, wobei es sich in Aufsicht zwischen den Kanten zur Mitte hin im wesentlichen verjüngt. Die Kanten sind den Innenkanten eines Hohlkörpers angeformt, in welchem das Verstrebungselement verwendet werden soll. Das Verstrebungselement 3a weist eine Nut 12 auf, an der es mit einem weiteren typischerweise gleichartig aufgebauten Verstrebungselement ineinandergreifen kann, so dass Nut in Nut greift.

Für die Wirkung der Nuten 12 und das Spiel gilt analog das gleiche wie für die Ausführungsform gemäss Figs. 15 bis 17.

Analog zur Ausführungsform gemäss Figs. 18 und 19 ist es auch möglich, in der Ausführungsform gemäss Figs. 15 bis 17 nur genau eine Nut 12 pro Verstrebungselement vorzusehen und nur Paare statt längere Ketten von Verstrebungselementen zu bilden. In diesem Fall kann eine Erhöhung der Stabilität (insbesondere der Biegesteifheit) beispielsweise erreicht werden, indem die Nut sich weiter in das Verstrebungselement hinein ausdehnt, beispielsweise bis etwa zu dessen Mitte.

Fig. 20 zeigt ein Halbzeug 1a mit Paaren von Verstrebungselementen aus Figs. 18 19, in einer Ansicht entlang der Längsachse A. Das Hüll-Element 4 umgibt die Verstrebungselemente 3a,3b so, dass diese, wenn das Halbzeug 1a zur Bildung eines Konstruktionselementes in einem Hohlkörper angeordnet ist, nicht an dem Hohlkörper haften bleiben können. Ein Anhaften von Verstrebungselementen am Hohlkörper (natürlich via Hüll-Element) an nur einem Ende des Verstrebungselementes oder ein nur geringes gegebenenfalls beid-endiges Anhaften ist vertretbar. Ein beidseitig starkes Anhaften hingegen ist zu vermeiden.

Wenn bei der Herstellung eines Konstruktionselementes oder eines Flächenelementes oder bei der quasi-gleichzeitigen Herstellung von Konstruktions- und Flächenelementen, wie sie im Zusammenhang mit Fig. 7 beschrieben wurde, ein Halbzeug 1a mit einem Fasermaterial umgeben wird, kann eine besonders grosse Belastbarkeit des erstellten Elementes erreicht werden, indem eine geeignete Ausrichtung oder Ausrichtungsverteilung der Fasern des Fasermaterials gewählt wird. Beispielsweise kann papierartiges Fasermaterial verwendet werden, also Fasermaterial, dessen Fasern unregelmässig ausgerichtet sind, oder Fasermaterial, dessen Fasern etwa 45° mit der Längsachse einschliessen.

Im Falle von Flächenelementen, die in im wesentlichen vertikaler Ausrichtung, also beispielsweise als Wand- oder Scheibenelement verwendet werden sollen, kann eine Stabilitätsverbesserung erzielt werden, indem vorgesehen wird, dass der überwiegende Teil der Fasern des Flächenelementes, insbesondere mindestens 80% der Fasern etwa 45° mit der Längsachse einschliessen.

Im Falle von Flächenelementen, die in im wesentlichen horizontaler Ausrichtung, also beispielsweise als Boden- oder Deckenelement oder sonst als statisch tragende Platte verwendet werden sollen, kann eine Stabilitätsverbesserung erzielt werden, indem vorgesehen wird, dass der überwiegende Teil der Fasern des Flächenelementes, insbesondere mindestens 80% der Fasern entweder im wesentlichen parallel oder im wesentlichen senkrecht zu der Längsachse ausgerichtet sind, vorzugsweise jeweils im wesentlichen hälftig parallel und senkrecht. Beispielsweise können die einzelnen Konstruktionselemente mit Fasermatten umwickelt sein, deren Fasern zum überwiegenden Teil oder praktisch alle innerhalb von ±10° parallel zur Längsachse ausgerichtet sind, und dann, zur Bildung eines Deckelementes, Fasermatten darauf angeordnet werden, deren Fasern zum überwiegenden Teil oder praktisch alle innerhalb von ±10° senkrecht zur Längsachse ausgerichtet sind.

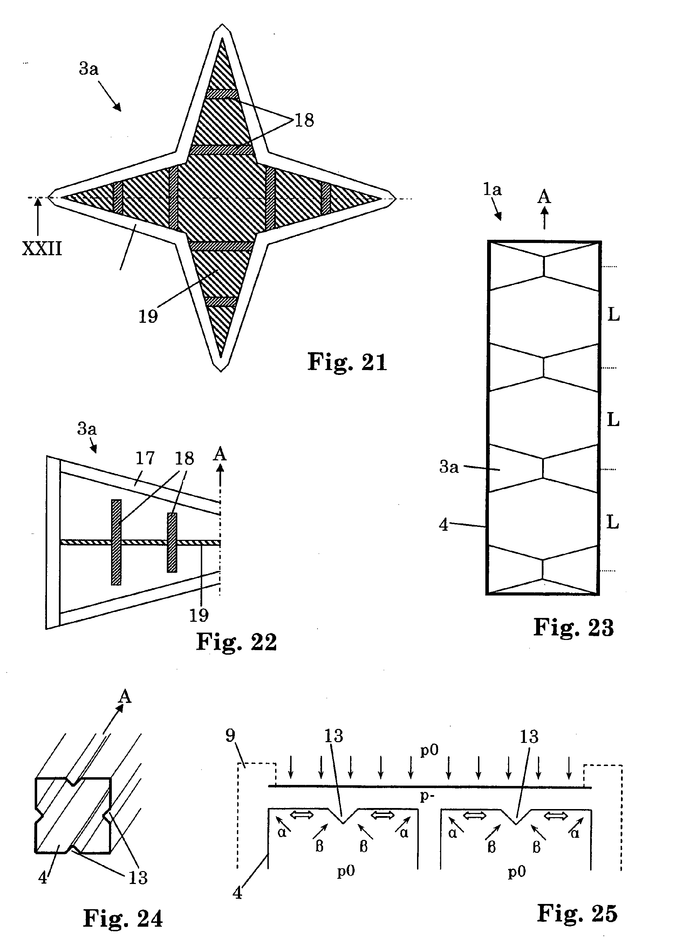

Fig. 21 zeigt ein sternförmiges strebenverstärktes Verstrebungselement 3a in einer Ansicht entlang der Längsachse A. Fig. 22 zeigt eine Sicht auf einen DetailSchnitt des Verstrebungselementes aus Fig. 21 entlang der mit XXII gekennzeichneten Linie in Fig. 21. Das Verstrebungselement 3a weist einen Rahmen 17 auf, der an ein flaches Sternelement 19 angeformt ist, und das Sternelement 19 ist durch Streben 18 verstärkt. Das Verstrebungselement 3a ist besonders biegesteif und kann grosse Druckkräfte aufnehmen und ist dabei sehr leicht (geringer Materialaufwand).

Fig. 23 zeigt schematisiert ein Halbzeug 1a mit beabstandeten Verstrebungselementen aus Figs. 21,22 in einer Aufsicht senkrecht zur Längsachse A. Ein direktes Aneinanderreihen der Verstrebungselemente ist auch möglich.

Fig. 24 zeigt ein Hüll-Element 4 mit Sicken 13. Derartige Sicken 13 sind insbesondere im Falle der Verwendung von Herstellungsverfahren, wie sie im Zusammenhang mit Fig. 7 erläutert wurden, wertvoll, wenn auch nicht notwendig. Fig. 25 dient der Erläuterung der Zusammenhänge.

Fig. 25 ist eine Veranschaulichung der Wirkung von Sicken 13 in einem Hüll-Element 4. Verstrebungselemente sind in Fig. 25 nicht dargestellt. Der Behälter 9 ist nur schematisch dargestellt. Durch das Erzeugen eines Unterdruckes p- ausserhalb der Hüll-Elemente 4 bei einem höheren Druck p0 (zum Beispiel Normaldruck) innerhalb der Hüll-Elemente 4 kommt es zu Kräften, die die Hüll-Elemente 4 von den Enden der Verstrebungselemente wegzieht. An den Kanten werden die Hüll-Elemente nach aussen gedehnt. Die mit α bezeichneten Pfeile symbolisieren diese Kräfte. Wenn diesen Kräften nicht entgegengewirkt wird, ist damit zu rechnen, dass die Verstrebungselemente in Hüll-Element 4 und Höhlkörper 2 nicht gehalten sind und auf den Hohlkörper wirkende Druckkräfte erst dann von den Verstrebungselementen aufgenommen werden, wenn sie sehr gross sind und bereits entsprechend grosse Deformationen des Hohlkörpers hervorgerufen haben. Ausserdem ist es bei beabstandeten Verstrebungselementen möglich, dass diese innerhalb des Hüll-Elementes 4 und somit innerhalb des Hohlkörpers ihre Position (entlang der Längsachse) ändern.

Durch das Vorsehen der Sicken 13 kann für das Auftreten von Kräften gesorgt werden, die den mit α gekennzeichneten Kräften entgegenwirken und das Auftreten der geschilderten Folgen verhindern können. Diese Kräfte sind durch die mit β bezeichneten Pfeile symbolisiert. Nahe den Sicken 13 treten Kräfte auf, die tendenziell zu einer Verringerung der Breite der Sicke führen. Dies wiederum führt dazu, dass das Material des Hüll-Elementes 13 von den Kanten in Richtung Sicke 13 gezogen wird. Die offenen Pfeile symbolisieren die einander entgegengesetzten Tendenzen, die durch die Kräfte α bzw. β hervorgerufen werden. Durch eine geeignete Abstimmung der Abmessungen der Sicke 13 auf die Hüll-Element-Abmessungen und die verwendeten Drücke p0,p- kann erreicht werden, dass in einem so hergestellten Flächenelement ein geeigneter Kontakt zwischen Verstrebungselementen und Hohlkörper (via Hüll-Element) vorliegt.

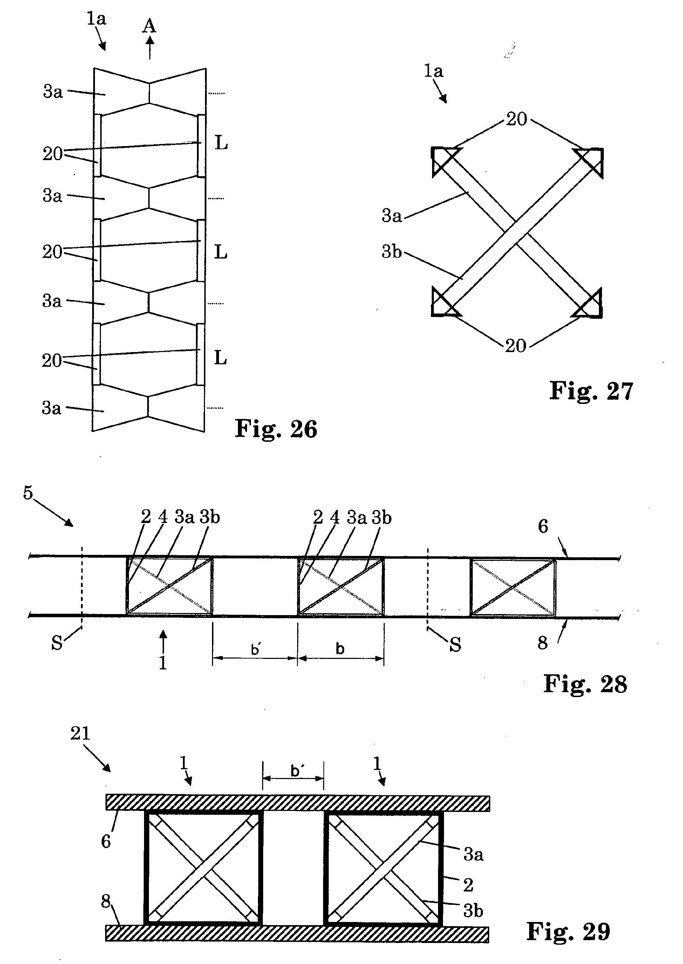

Halbzeuge, auf Basis derer Konstruktionselemente 1 oder Flächenelemente 5 erstellt werden, müssen, von einem allgemeineren Standpunkt aus gesehen, nicht notwendigerweise ein Hüll-Element 4 aufweisen. Dies wurde oben bereits angedeutet. Allgemeiner formuliert weist ein Halbzeug 1a eine Längsachse A auf, und durch das Halbzeug 1a sind vier parallel zu der Längsachse L verlaufende Kanten (vorzugsweise im wesentlichen durchgehende Kanten) eines Quaders gebildet. Weiter weist das Halbzeug 1a mindestens ein erstes 3a und mindestens ein zweites 3b Verstrebungselement sowie mindestens ein Halte-Element auf. Das mindestens eine Halteelement kann bspw. ein Hüll-Element 4 und/oder eine Mehrzahl von Verbindungselementen 20 (vgl. Fig. 26) aufweisen oder sein. Die Verstrebungselemente 3a,3b sind durch das mindestens eine Halte-Element miteinander verbunden. Das erste Verstrebungselement 3a ist von einem ersten Punkt P1 an einer ersten Kante des Quaders zu einem zweiten Punkt P2 an einer zweiten Kante des Quaders erstreckt, und das zweite Verstrebungselement 3b ist von einem dritten Punkt P3 an einer dritten Kante des Quaders zu einem vierten Punkt P4 an einer vierten Kante des Quaders erstreckt. Durch das mindestens eine Halte-Element kann eine geeignete und stabile Basis für die einfache Erstellung von Konstruktionselementen geschaffen werden, und die Verstrebungselemente können relativ zueinander in ihrer Position gehalten werden.

Fig. 26 zeigt ein Halbzeug 1a mit Verstrebungselementen 3a aus Figs. 21,22, die durch Verbindungselemente 20 miteinander verbunden sind, in einer Aufsicht senkrecht zur Längsachse A. Die Verbindungselemente 20 sind an den Kanten des Quaders angeordnet und stabartig ausgebildet sowie im wesentlichen parallel zu der Längsachse A ausgerichtet. Die Verbindung zwischen Verbindungselementen 20 und Verstrebungselementen 3a kann formschlüssig, beispielsweise als eine Schnappverbindung ausgebildet sein. Es ist möglich, längere Verbindungselemente 20 vorzusehen, die sich beispielsweise im wesentlichen entlang der Gesamtlänge des Halbzeuges (entlang der Längeachse A) erstrecken, so dass nur vier Verbindungselemente 20 pro Halbzeug 1a benötigt werden (je eines pro Quaderkante).

Fig. 27 zeigt, in einer Schnitt-Ansicht entlang der Längsachse A, ein Halbzeug 1a mit im wesentlichen stabförmigen Verstrebungselementen 3a,3b, die durch Verbindungselemente 20 miteinander verbunden sind. Die Verbindungselemente 20 sind hohl ausgebildet mit dreieckigem Querschnitt und verbinden jeweils benachbarte erste Verstrebungselemente 3a bzw. jeweils benachbarte zweite Verstrebungselemente 3b. Zur Stabilisierung des Halbzeuges 1a ist noch mindestens eine Verbindung zwischen ersten und zweiten Verstrebungselementen vorzusehen (nicht dargestellt in Fig. 27).

Es kann vorgesehen werden, dass nach der Erstellung eines Konstruktions- oder eines Flächenelementes auf Basis eines Halbzeuges 1a das mindestens eine Halte-Element in dem erstellten Konstruktions- oder Flächenelement verbleibt, insbesondere dass die Verbindungselemente 20 (alle, oder die Mehrzahl der Verbindungselemente 20) in dem erstellten Konstruktions- oder Flächenelement verbleiben; aber es kann auch alternativ vorgesehen sein, dass das mindestens eine Halte-Element, insbesondere die Verbindungselemente 20 (alle, oder die Mehrzahl der Verbindungselemente 20) aus dem erstellten Konstruktions- oder Flächenelement wieder entfernt werden.

Anhand der Figs. 28 und 29 wird ein Trägerelement und dessen Erstellung erläutert.

Fig. 28 zeigt, in gleicher Weise wie Fig. 3, ein Flächenelement 5, geschnitten senkrecht zur Längsachse A der Konstruktionselemente 1. Das Flächenelement 5 weist beabstandete Konstruktionselemente 1 auf. Anstatt die Konstruktionselemente 1 direkt aneinander angrenzen zu lassen, können diese auch beabstandet angeordnet sein (Abstand b'). Beispielsweise können Platzhalter zwischen den Konstruktionselementen 1 angeordnet werden, die gegebenenfalls später wieder entfernt werden. Beispielsweise können jeweils zwischen benachbarten Konstruktionselementen 1 Hohlkörper angeordnet werden, die den Hohlkörpern 2 der Konstruktionselemente 1 entsprechen oder von diesen verschieden sind.

Ein Flächenelement 5 gemäss Fig. 28 kann als Vorstufe für die Erstellung eines Trägerelementes 21 verwendet werden. Fig. 29 zeigt ein Trägerelement 21, geschnitten senkrecht zur Längsachse der Konstruktionselemente 1. Zur Erstellung des Trägerelementes 21 wird ein Flächenelement 5 ähnlich dem in Fig. 28 dargestellten, parallel zur Längsachse an den mit S gekennzeichneten Schnittlinien aufgetrennt. Der Abstand der Schnittlinie S zu dem nächstgelegenen Konstruktionselement 1 kann auch grösser oder kleiner als b'/2 sein. Ein solches Trägerelement 21 kann vielfältig als Biegeträger eingesetzt werden.

Typische derzeit als besonders geeignet eingeschätzte Masse solcher Trägerelemente 21 sind: Länge (parallel zur Längsachse A) 1 m bis 40 m; Breite (senkrecht zur Längsachse A) 20 cm bis 1 m oder bis 4 m oder breiter; Höhe (senkrecht zur Längsachse A) 10 cm bis 60 cm oder bis 4 m oder höher.

Fig. 29 ist ausserdem ein Beispiel für Konstruktions- und Flächenelemente, die kein vom Hohlkörper 2 separates Hüll-Element 4 aufweisen.

Bei Verstrebungselementen, die nur mit zwei Hohlkörperkanten wechselwirken (vgl. Figs. 1 bis 4, 8, 13 bis 20, 27), kann vorgesehen werden, dass diese alternierend entlang der einen und der anderen Hohlkörperdiagonalen angeordnet werden, wobei sie aneinander angrenzend oder voneinander entlang der Längsachse beabstandet (vgl. Figs. 2 und 23) sein können. Alternativ ist es auch möglich, dass jeweils zwei solcher Verstrebungselemente ineinander eingreifend angeordnet sind und sich bezüglich ihrer längsachsenbezogenen Position überlappen (vgl. Fig. 17) oder diesbezüglich im wesentlichen gleichpositioniert sind (vgl. die Verstrebungselemente aus Figs. 18 bis 20). Solche ineinandergreifende Verstrebungselemente können Paare bilden (vgl. die Verstrebungselemente aus Figs. 18 bis 20), die wiederum aneinander angrenzend oder voneinander entlang der Längsachse beabstandet angeordnet sein können, oder sie bilden eine oder mehrere Ketten von ineinandergreifenden Verstrebungselementen (vgl. Fig. 17).

Um grosse Druckbelastbarkeiten der Konstruktionselemente und Flächenelemente zu erreichen, müssen die Verstrebungselemente eine grosse Biegesteifheit aufweisen. Eine solche kann ausser durch die Materialwahl auch durch die geometrische Ausgestaltung der Verstrebungselemente (vgl. Figs. 11 bis 14 und 21, 22) massgeblich beeinflusst werden sowie durch das Zusammenwirken von Verstrebungselementen untereinander, wie im Falle ineinander eingreifender Verstrebungselemente (vgl. Figs. 17, 20).

Mittels der Erfindung können extrem leichte und dennoch stabile längliche oder flächige Konstruktionselemente geschaffen werden, die vielseitig einsetzbar sind. Das in sich geschlossene statische System ist in seiner Tragweise vergleichbar mit einem räumlichen Fachwerk, kommt aber ohne die Knotenpunkte eines Fachwerks aus, da die Verstrebungselemente sich nicht in einem Punkt treffen müssen.

### Bezugszeichenliste

- 1: Konstruktionselement
- 1a: Halbzeug
- 2: Hohlkörper
- 3a, 3b: Verstrebungselemente
- 4: Hüll-Element
- 5: Flächenelement
- 6: Deckelement
- 7: Füllmaterial
- 8: Deckelement
- 9: Behälter
- 10: Befestigungsmittel, Verzahnungselement
- 11: Befestigungsmittel, Verbindungselement
- 12: Nut
- 13: Sicke
- 14: Fasermaterial
- 15: Begrenzung
- 16: Begrenzung
- 17: Rahmen
- 18: Strebe
- 19: Sternelement
- 20: Verbindungselement, Stabilisierungselement
- 21: Träger-Element, Biegeträger

- a1, a2: Längen
- A: Längachse
- b: Breite
- b': Breite
- d: Wandstärke
- D: Durchmesser
- h: Höhe
- L: Abstand
- p0: Druck
- p-: Druck
- P1, P2, P3, P4: Punkte
- S: Schnittlinie
- t: Wandstärke
- δ: Nutbreite

## Patentansprüche

1. Halbzeug (1a) für statisch tragende Konstruktionselemente aufweisend ein schlauchartig entlang einer Längsachse (A) erstrecktes Hüll-Element (4) sowie mindestens ein erstes (3a) und mindestens ein zweites (3b) innerhalb des Hüll-Elementes (4) angeordnetes Verstrebungselement, wobei das erste Verstrebungselement (3a) von einem ersten Punkt (P1) zu einem zweiten Punkt (P2) erstreckt ist und das zweite Verstrebungselement (3b) von einem dritten Punkt (P3) zu einem vierten Punkt (P4) erstreckt ist, wobei die Projektionen der genannten Punkte (P1, P2, P3, P4) in eine zu der Längsachse (A) senkrechte Ebene vier Eckpunkte eines Rechteckes bilden, wobei die Projektionen des ersten (P1) und des zweiten (P2) Punktes einander bezüglich der Längsachse (A) gegenüberliegende Eckpunkte des Rechteckes bilden, **dadurch gekennzeichnet dass** die Verstrebungselemente (3a, 3b) in Richtung der Längsache (A) voneinander beabstandet oder in Richtung der Längsachse (A) hintereinander und sich gegebenenfalls überlappend angeordnet sind und jedes Verstrebungselement (3a, 3b) im ersten (P1) bzw. dritten (P3) und zweiten Punkt (P2) bzw. vierten Punkt (P4) nur an das schlauchartige Hüll-Element (4) anliegend angeordnet ist, ohne an dem Hüll-Element befestigt zu sein und nicht an diesem zu haften, so dass durch das Hüll-Element (4) keine Zugkräfte auf die Verstrebungselemente (3a, 3b) ausübbar sind.

2. Halbzeug (1a) gemäss Anspruch 1, **dadurch gekennzeichnet, dass** die Verstrebungselemente (3a,3b) so ausgebildet und innerhalb des Hüll-Elementes (4) so angeordnet sind, dass durch das Hüll-Element (4) Druckkräfte auf die Verstrebungselemente (3a,3b) ausübbar sind.

3. Halbzeug (1a) gemäss einem der vorangegangenen Ansprüche, **dadurch gekennzeichnet, dass** der erste (P1) und der zweite (P2) Punkt in ein und derselben Ebene senkrecht zu der Längsachse (A) liegen, und dass der dritte (P3) und der vierte (P4) Punkt in ein und derselben Ebene senkrecht zu der Längsachse (A) liegen.

4. Halbzeug (1a) gemäss einem der vorangegangenen Ansprüche, **dadurch gekennzeichnet, dass** die Verstrebungselemente (3a,3b) jeweils im wesentlichen senkrecht zu der Längsachse (A) ausgerichtet sind.

5. Halbzeug (1a) gemäss einem der vorangegangenen Ansprüche, **dadurch gekennzeichnet, dass** das Hüll-Element (4) im wesentlichen eine Folie ist.

6. Halbzeug (1a) gemäss einem der vorangegangenen Ansprüche, **dadurch gekennzeichnet, dass** das Hüll-Element (4) in mindestens einer durch das Hüll-Element (4) gebildeten Fläche, die zwei der genannten Punkte (P1,P2,P3,P4) enthält, eine im wesentlichen parallel zur Längsachse (A) verlaufende Sicke (13) aufweist.

7. Halbzeug (1a) gemäss einem der vorangegangenen Ansprüche, **dadurch gekennzeichnet, dass** das erste Verstrebungselement (3a) und das zweite Verstrebungselement (3b) ineinander eingreifend ausgebildet sind, derart, dass jeweils das eine Verstrebungselement (3a;3b) ein Biegen des jeweils anderen Verstrebungselementes (3b;3a) erschwert oder verhindert.

8. Halbzeug (1a) gemäss einem der vorangegangenen Ansprüche, **dadurch gekennzeichnet, dass** die Verstrebungselemente (3a,3b) im wesentlichen aus Keramik, aus Beton oder aus einem Kunststoff, insbesondere einem faserverstärktem Kunststoff gefertigt sind.

9. Konstruktionselement (1) aufweisend ein Halbzeug (1a) gemäss einem der vorangegangenen Ansprüche, wobei das Hüll-Element (4) einen entlang der Längsachse (A) erstreckten Hohlkörper (2) mit im wesentlichen rechteckigem Querschnitt mit gegebenenfalls gerundeten Ecken bildet oder innerhalb eines solchen Hohlkörpers (2) des Konstruktionselementes (1) angeordnet ist.

10. Konstruktionselement (1) gemäss Anspruch 9, **dadurch gekennzeichnet, dass** der Hohlkörper (2) im wesentlichen aus einem faserverstärkten Kunststoff gefertigt ist.

11. Konstruktionselement (1) gemäss Anspruch 10, **dadurch gekennzeichnet, dass** der überwiegende Teil der Fasern des faserverstärkten Kunststoffes einen Winkel von 45°±25° mit der Längsachse (A) bildet.

12. Flächenelement (5), aufweisend mehrere nebeneinander angeordnete und relativ zueinander befestigte Konstruktionselemente (1) gemäss einem der Ansprüche 9 bis 11.

13. Flächenelement (5) gemäss Anspruch 12, **dadurch gekennzeichnet, dass** es ein oberhalb oder unterhalb der Konstruktionselemente (1) angeordnetes Deckelement (6) aufweist.

14. Flächenelement (5) gemäss Anspruch 12 oder Anspruch 14, **dadurch gekennzeichnet, dass** es zwei Konstruktionselemente (1) aufweist, die voneinander senkrecht zu der Längsachse (A) beabstandet angeordnet sind, ohne dass ein weiteres Konstruktionselement (1) zwischen ihnen angeordnet ist.

15. Verfahren zur Herstellung eines Flächenelementes (5) gemäss einem der Ansprüche 12 bis 14, **dadurch gekennzeichnet, dass** mindestens ein Halbzeug (1a), durch welches vier parallel zu einer Längsachse (L) verlaufende Kanten eines Quaders gebildet sind und welches mindestens ein erstes (3a) und mindestens ein zweites (3b) Verstrebungselement aufweist, wobei das erste Verstrebungselement (3a) von einem ersten Punkt (P1) an einer ersten Kante des Quaders zu einem zweiten Punkt (P2) an einer zweiten Kante des Quaders erstreckt ist und das zweite Verstrebungselement (3b) von einem dritten Punkt (P3) an einer dritten Kante des Quaders zu einem vierten Punkt (P4) an einer vierten Kante des Quaders erstreckt ist, mit einem Fasermaterial (14) umgeben wird und mehrere derartige mit Fasermaterial (14) umgebene Halbzeuge (1a) nebeneinander angeordnet werden, und dass ein Füllmaterial (7) in das Fasermaterial (14) eingebracht und gehärtet wird.

16. Verfahren gemäss Anspruch 15, **dadurch gekennzeichnet, dass** zum Einbringen des Füllmaterials (7) in das Fasermaterial (14) an dem Fasermaterial (14) ein Unterdruck erzeugt wird.

17. Verfahren gemäss Anspruch 16, **dadurch gekennzeichnet, dass** zumindest ein Abschnitt der mit Fasermaterial (14) umgebenen Halbzeuge (1a) zwischen zwei Begrenzungen (15,16) angeordnet wird und zwischen den Begrenzungen (15,16) der Unterdruck (p-) erzeugt wird, während jenseits mindestens einer der Begrenzungen (15;16) sowie innerhalb der Halbzeuge (1a) höherer Druck (p0) herrscht.

## Claims

1. A semi-finished product (1a) for load-bearing construction elements having a tubular sleeve element (4) which extends along a longitudinal axis (A) and at least a first (3a) and at least a second (3b) strut element arranged inside the sleeve element (4), wherein the first strut element (3a) extends from a first point (P1) to a second point (P2), and the second strut element (3b) extends from a third point (P3) to a fourth point (P4), wherein the projections of said points (P1, P2, P3, P4) in a plane perpendicular to the longitudinal axis (A) form four corner points of a rectangle, wherein the projections of the first (P1) and the second (P2) points form corner points of the rectangle which are opposite each other relative to the longitudinal axis (A), **characterized in that**
the strut elements (3a, 3b) are spaced apart from one another in the direction of the longitudinal axis (A) or are arranged one behind the other in the direction of the longitudinal axis (A) and may overlap one another, and wherein each of the strut elements (3a, 3b) is arranged to rest against solely the tubular sleeve element (4) in the first (P1) or rather third (P3) and second point (P2) or rather forth point (P4), arranged to be not connected to the sleeve element and to not adhere to thereof, in such a way that no tensile forces can be exerted on the strut elements (3a, 3b) by the sleeve element (4).

2. The semi-finished product (1a) as claimed in claim 1, **characterized in that** the strut elements (3a, 3b) are designed in such a way and arranged inside the sleeve element (4) in such a way that compressive forces can be exerted on the strut elements (3a, 3b) by the sleeve element (4).

3. The semi-finished product (1a) as claimed in one of the preceding claims, **characterized in that** the first (P1) and the second (P2) point lie in one and the same plane perpendicular to the longitudinal axis (A), and **in that** the third (P3) and the fourth (P4) point lie in one and the same plane perpendicular to the longitudinal axis (A).

4. The semi-finished product (1a) as claimed in one of the preceding claims, **characterized in that** the strut elements (3a, 3b) are each oriented substantially perpendicular to the longitudinal axis (A).

5. The semi-finished product (1a) as claimed in one of the preceding claims, **characterized in that** the sleeve element (4) is substantially a film.

6. The semi-finished product (1a) as claimed in one of the preceding claims, **characterized in that** the sleeve element (4) has, in at least one surface formed by the sleeve element (4) and which contains two of said points (P1, P2, P3, P4), a corrugation (13) which runs substantially parallel to the longitudinal axis (A).

7. The semi-finished product (1a) as claimed in one of the preceding claims, **characterized in that** the first strut element (3a) and the second strut element (3b) are designed such that they engage with each other in such a way that the respective one strut element (3a; 3b) impedes or prevents the respective other strut element (3b; 3a) from bending.

8. The semi-finished product (1a) as claimed in one of the preceding claims, **characterized in that** the strut elements (3a, 3b) are substantially fabricated from ceramic, from concrete, or from a plastic, in particular a fiber-reinforced plastic.

9. A construction element (1) having a semi-finished product (1a) as claimed in one of the preceding claims, wherein the sleeve element (4) forms a hollow body (2) which extends along the longitudinal axis (A) and has a substantially rectangular cross-section, possibly with rounded corners, or is arranged inside such a hollow body (2) of the construction element (1).

10. The construction element (1) as claimed in claim 9, **characterized in that** the hollow body (2) is fabricated substantially from a fiber-reinforced plastic.

11. The construction element (1) as claimed in claim 10, **characterized in that** the majority of the fibers of the fiber-reinforced plastic form an angle of 45°±25° with the longitudinal axis (A).

12. A surface element (5) having a plurality of construction elements (1) as claimed in one of the claims 9 to 11 which are arranged next to one another and fastened relative to one another.

13. The surface element (5) as claimed in claim 12, **characterized in that** it has a cover element (6) arranged above or below the construction elements (1).

14. The surface element (5) as claimed in claim 12 or 13, **characterized in that** it has two construction elements (1) which are arranged spaced apart from each other perpendicular to the longitudinal axis (A), without a further construction element (1) being arranged between them.

15. A method for producing a surface element (5) according to one of claims 12 to 14, **characterized in that** at least one semi-finished product (1a) by means of which four edges of a cuboid running parallel to a longitudinal axis (L) are formed and which has at least a first (3a) and at least a second (3b) strut element, the first strut element (3a) extending from a first point (P1) on a first edge of the cuboid to a second point (P2) on a second edge of the cuboid and the second strut element (3b) extending from a third point (P3) on a third edge of the cuboid to a fourth point (P4) on a fourth edge of the cuboid, is surrounded with a fibrous material (14), and wherein a plurality of such semi-finished products (1a) surrounded with fibrous material (14) are arranged next to one another, and **in that** a filling material (7) is introduced into the fibrous material (14) and hardened.

16. The method as claimed in claim 15, **characterized in that** a negative pressure is applied to the fibrous material (14) in order to introduce the filling material (7) into the fibrous material (14).

17. The method as claimed in claim 16, **characterized in that** at least one section of the semi-finished products (1a) surrounded by fibrous material (14) is arranged between two boundaries (15, 16) and the negative pressure (p-) is generated between the boundaries (15, 16), whereas a higher pressure (p0) prevails beyond at least one of the boundaries (15, 16) and inside the semi-finished products (1a).

## Revendications

1. Produit semi-fini (1a) pour éléments de construction porteurs statiques présentant un élément enveloppant (4) en forme de tuyau étiré le long d'un axe longitudinal (A), ainsi qu'au moins un premier (3a) et au moins un deuxième élément d'entretoise (3b) disposé à l'intérieur de l'élément enveloppant (4), le premier élément d'entretoise (3a) s'étirant d'un premier point (P1) à un deuxième point (P2) et le deuxième élément d'entretoise (3b) s'étirant d'un troisième point (P3) à un quatrième point (P4), les projections des points susnommés (P1, P2, P3, P4) constituant quatre sommets d'un rectangle dans un plan vertical par rapport à l'axe longitudinal (A), les projections du premier (P1) et du second point (P2) constituant des sommets du rectangle se faisant face par rapport à l'axe longitudinal (A), **caractérisé en ce que** les éléments d'entretoise (3a, 3b) sont espacés les uns des autres en direction de l'axe longitudinal (A) ou disposés les uns derrière les autres en direction de l'axe longitudinal (A), en se chevauchant éventuellement, et chaque élément d'entretoise (3a, 3b) étant disposé seulement au contact de l'élément enveloppant (4) en forme de tuyau dans le premier (P1) ou le troisième (P3) et le deuxième point (P2) ou le quatrième point (P4), sans être fixé sur l'élément enveloppant et sans adhérer à celui-ci, si bien que l'élément enveloppant (4) ne peut pas exercer d'efforts de traction sur les éléments d'entretoise (3a, 3b).

2. Produit semi-fini (1a) selon revendication 1, **caractérisé en ce que** les éléments d'entretoise (3a, 3b) sont configurés de telle sorte et disposés de telle sorte dans l'élément enveloppant (4) que l'élément enveloppant (4) peut exercer des efforts de pression sur les éléments d'entretoise (3a, 3b).

3. Produit semi-fini (1a) selon l'une des revendications précédentes, **caractérisé en ce que** le premier (P1) et le deuxième point (P2) se situent dans un seul et même plan vertical par rapport à l'axe longitudinal (A) et que le troisième (P3) et le quatrième point (P4) se situent dans un seul et même plan vertical par rapport à l'axe longitudinal (A).

4. Produit semi-fini (1a) selon l'une des revendications précédentes, **caractérisé en ce que** chacun des éléments d'entretoise (3a, 3b) est, pour l'essentiel, orienté verticalement par rapport à l'axe longitudinal (A).

5. Produit semi-fini (1a) selon l'une des revendications précédentes, **caractérisé en ce que** l'élément enveloppant (4) est, pour l'essentiel, une pellicule.

6. Produit semi-fini (1a) selon l'une des revendications précédentes, **caractérisé en ce que** l'élément enveloppant (4) présente, dans au moins une surface formée par l'élément enveloppant (4) et comportant deux des points susnommés (P1 P2, P3, P4), une gorge (13) au tracé essentiellement parallèle à l'axe longitudinal (A).

7. Produit semi-fini (1a) selon l'une des revendications précédentes, **caractérisé en ce que** le premier élément d'entretoise (3a) et le deuxième élément d'entretoise (3b) sont configurés de manière à s'imbriquer l'un dans l'autre, si bien qu'un élément d'entretoise (3a; 3b) gêne ou empêche la torsion de l'autre élément d'entretoise (3a; 3b).

8. Produit semi-fini (1a) selon l'une des revendications précédentes, **caractérisé en ce que** les éléments d'entretoise (3a, 3b) sont fabriqués, pour l'essentiel, en céramique, en béton ou en matière plastique, notamment une matière plastique renforcée par des fibres.

9. Elément de construction (1) présentant un produit semi-fini (1a) selon l'une des revendications précédentes, l'élément enveloppant (4) formant un corps creux (2) étiré le long de l'axe longitudinal (A) et présentant, pour l'essentiel, une section rectangulaire avec des coins éventuellement arrondis, ou un élément de construction (1) étant disposé dans un tel corps creux (2).

10. Elément de construction (1) selon revendication 9, **caractérisé en ce que** le corps creux (2) est fabriqué, pour l'essentiel, dans une matière plastique renforcée par des fibres.

11. Elément de construction (1) selon revendication 10, **caractérisé en ce que** la majeure partie des fibres de la matière plastique renforcée par des fibres forme un angle de 45°^{±25°} avec l'axe longitudinal (A).

12. Elément de surface (5) présentant plusieurs éléments de construction (1) disposés côte à côte et fixés les uns aux autres selon l'une des revendications 9 à 11.

13. Elément de surface (5) selon revendication 12, **caractérisé en ce qu'**il présente un élément de couverture (6) disposé au-dessus ou en dessous des éléments de construction (1).

14. Elément de surface (5) selon revendication 12 ou revendication 14, **caractérisé en ce qu'**il présente deux éléments de construction (1) disposés perpendiculairement l'un à l'autre et espacés de l'axe longitudinal (A) sans qu'un autre élément de construction (1) soit disposé entre eux.

15. Procédé pour la fabrication d'un élément de surface (5) selon l'une des revendications 12 à 14, **caractérisé en ce qu'**au moins un produit semi-fini (1a), constituant quatre arêtes d'un parallélépipède, parallèles à un axe longitudinal (L) et présentant au moins un premier (3a) et au moins un deuxième (3b) élément d'entretoise, le premier élément d'entretoise (3a) s'étirant d'un premier point (P1) sur une première arête du parallélépipède à un deuxième point (P2) sur une deuxième arête du parallélépipède et le deuxième élément d'entretoise (3b) s'étirant d'un troisième point (P3) sur une troisième arête du parallélépipède à un quatrième point (P4) sur une quatrième arête du parallélépipède, est entouré d'une matière fibreuse (14) et que plusieurs tels produits semi-finis (1a) entourés de matière fibreuse (14) sont disposés côte à côte et qu'un matériau de remplissage (7) est intégré et durci dans la matière fibreuse (14).

16. Procédé selon revendication 15, **caractérisé en ce que**, pour intégrer le matériau de remplissage (7) dans la matière fibreuse (14), on génère une dépression sur la matière fibreuse (14).

17. Procédé selon revendication 16, **caractérisé en ce qu'**au moins une section des produits semi-finis (1a) entourés de matière fibreuse (14) est disposée entre deux délimitations (15, 16) et que la dépression (p-) est générée entre les délimitations (15, 16), tandis qu'une pression plus élevée (p0) règne au-delà d'au moins une des deux délimitations (15; 16) ainsi que dans les produits semi-finis (1a) .
